# EUROPEAN PATENT SPECIFICATION

(11) **EP 1 784 079 B1**
(45) Date of publication and mention of the grant of the patent: **23.01.2013**
(21) Application number: 05791774.2
(22) Date of filing: 23.08.2005
(51) Int. Cl.: A23B 7/02, A23L 1/2165, A23L 1/015, A23B 7/154, A23B 7/157, A23L 1/217, A23L 3/3508, A23L 3/358

(54) **METHOD FOR REDUCING ACRYLAMIDE FORMATION IN THERMALLY PROCESSED FOODS**
VERFAHREN ZUR REDUKTION DER ACRYLAMID-BILDUNG IN THERMISCH VERARBEITETEN LEBENSMITTELN
PROCEDE PERMETTANT DE REDUIRE LA FORMATION D'ACRYLAMIDE DANS DES ALIMENTS TRAITES THERMIQUEMENT

(30) Priority: 31.08.2004 US 931021
(43) Date of publication of application: 16.05.2007
(73) Proprietor: Frito-Lay North America, Inc., Plano, TX 75024-4099 (US)
(72) Inventor: ELDER, Vincent, Allen, Carrollton, TX 75007 (US); FULCHER, John, Gregory, Dallas, TX 75220 (US); LEUNG, Henry, Kin-Hang, Plano, TX 75093 (US); TOPOR, Michael, Grant, Little Elm, TX 75068 (US)
(74) Representative: Jenkins, Peter David
(86) International application number: PCT/US2005/030030
(87) International publication number: WO 2006/026278

(56) References cited:
- EP-A- 1 419 703
- WO-A-2005/034649
- FR-A- 874 453
- US-A1- 2004 058 045
- US-A1- 2004 058 046
- US-B1- 6 599 547
- DATABASE WPI Week 199329 Derwent Publications Ltd., London, GB; AN 1993-234163 XP002473734 & SU 1 750 586 A1 (INTERBIOS RES ASSOC) 30 July 1992 (1992-07-30)

## Description

### Technical Field

The present invention relates to a method for reducing the amount of acrylamide in thermally processed foods and permits the production of foods having significantly reduced levels of acrylamide. The invention more specifically relates to: a) adding a combination of two or more acrylamide-reducing agents when making a fabricated food product and b) the use of various acrylamide-reducing agents during the production of potato flakes or other intermediate products used in making a fabricated food product.

### Description of Related Art

The chemical acrylamide has long been used in its polymer form in industrial applications for water treatment, enhanced oil recovery, papermaking, flocculants, thickeners, ore processing and permanent press fabrics. Acrylamide participates as a white crystalline solid, is odorless, and is highly soluble in water (2155 g/L at 30°C). Synonyms for acrylamide include 2-propenamide, ethylene carboxamide, acrylic acid amide, vinyl amide, and propenoic acid amide. Acrylamide has a molecular mass of 71.08, a melting point of 84.5°C, and a boiling point of 125°C at 25 mmHg.

In very recent times, a wide variety of foods have tested positive for the presence of acrylamide monomer. Acrylamide has especially been found primarily in carbohydrate food products that have been heated or processed at high temperatures. Examples of foods that have tested positive for acrylamide include coffee, cereals, cookies, potato chips, crackers, french-fried potatoes, breads and rolls, and fried breaded meats. In general, relatively low contents of acrylamide have been found in heated protein-rich foods, while relatively high contents of acrylamide have been found in carbohydrate-rich foods, compared to non-detectable levels in unheated and boiled foods. Reported levels of acrylamide found in various similarly processed foods include a range of 330 - 2,300 (µg/kg) in potato chips, a range of 300 - 1100 (µg/kg) in french fries, a range 120 - 180 (µg/kg) in corn chips, and levels ranging from not detectable up to 1400 (µg/kg) in various breakfast cereals.

It is presently believed that acrylamide is formed from the presence of amino acids and reducing sugars. For example, it is believed that a reaction between free asparagine, an amino acid commonly found in raw vegetables, and free reducing sugars accounts for the majority of acrylamide found in fried food products. Asparagine accounts for approximately 40% of the total free amino acids found in raw potatoes, approximately 18% of the total free amino acids found in high protein rye, and approximately 14% of the total free amino acids found in wheat.

The formation of acrylamide from amino acids other than asparagine is possible, but it has not yet been confirmed to any degree of certainty. For example, some acrylamide formation has been reported from testing glutamine, methionine, cysteine, and aspartic acid as precursors. These findings are difficult to confirm, however, due to potential asparagine impurities in stock amino acids. Nonetheless, asparagine has been identified as the amino acid precursor most responsible for the formation of acrylamide.

Since acrylamide in foods is a recently discovered phenomenon, its exact mechanism of formation has not been confirmed. However, it is now believed that the most likely route for acrylamide formation involves a Maillard reaction. The Maillard reaction has long been recognized in food chemistry as one of the most important chemical reactions in food processing and can affect flavor, color, and the nutritional value of the food. The Maillard reaction requires heat, moisture, reducing sugars, and amino acids.

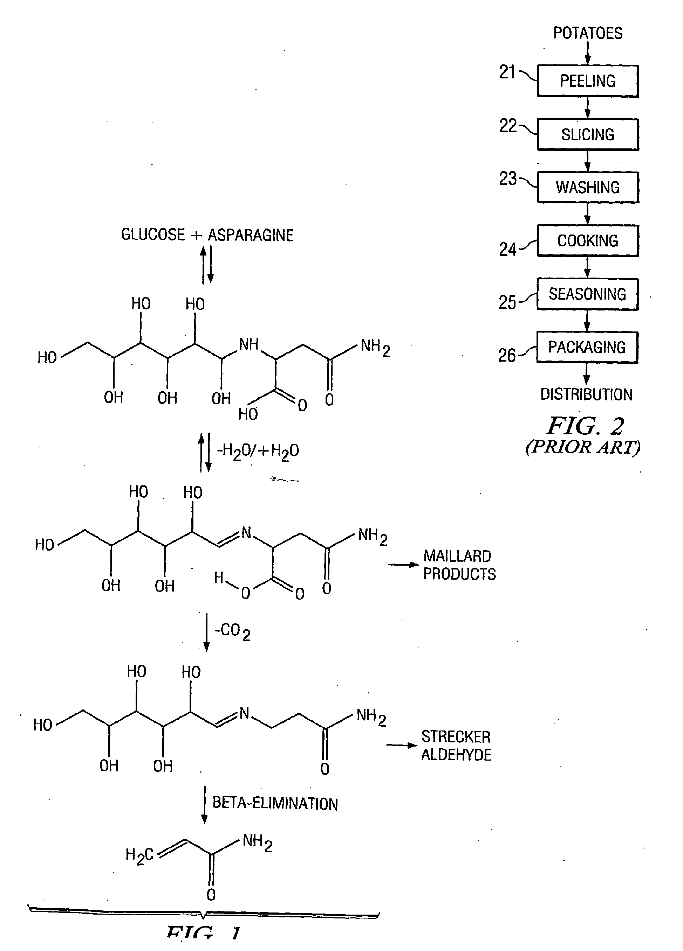

The Maillard reaction involves a series of complex reactions with numerous intermediates, but can be generally described as involving three steps. The first step of the Maillard reaction involves the combination of a free amino group (from free amino acids and/or proteins) with a reducing sugar (such as glucose) to form Amadori or Heyns rearrangement products. The second step involves degradation of the Amadori or Heyns rearrangement products via different alternative routes involving deoxyosones, fission, or Strecker degradation. A complex series of reactions - including dehydration, elimination, cyclization, fission, and fragmentation - results in a pool of flavor intermediates and flavor compounds. The third step of the Maillard reaction is characterized by the formation of brown nitrogenous polymers and co-polymers. Using the Maillard reaction as the likely route for the formation of acrylamide, **Figure 1** illustrates a simplification of suspected pathways for the formation of acrylamide starting with asparagine and glucose.

Acrylamide has not been determined to be detrimental to humans, but its presence in food products, especially at elevated levels, is undesirable. As noted previously, relatively higher concentrations of acrylamide are found in food products that have been heated or thermally processed. The reduction of acrylamide in such food products could be accomplished by reducing or eliminating the precursor compounds that form acrylamide, inhibiting the formation of acrylamide during the processing of the food, breaking down or reacting the acrylamide monomer once formed in the food, or removing acrylamide from the product prior to consumption. Understandably, each food product presents unique challenges for accomplishing any of the above options. For example, foods that are sliced and cooked as coherent pieces may not be readily mixed with various additives without physically destroying the cell structures that give the food products their unique characteristics upon cooking. Other processing requirements for specific food products may likewise make acrylamide reduction strategies incompatible or extremely difficult.

By way of example, **Figure 2** illustrates well-known prior art methods for making fried potato chips from raw potato stock. The raw potatoes, which contain about 80% or more water by weight, first proceed to a peeling step **21.** After the skins are peeled from the raw potatoes, the potatoes are then transported to a slicing step **22.** The thickness of each potato slice at the slicing step **22** is dependent on the desired the thickness of the final product. An example in the prior art involves slicing the potatoes to about 0.053 inches in thickness. These slices are then transported to a washing step **23,** wherein the surface starch on each slice is removed with water. The washed potato slices are then transported to a cooking step **24.** This cooking step **24** typically involves frying the slices in a continuous fryer at, for example, 177°C for approximately 2.5 minutes. The cooking step generally reduces the moisture level of the chip to less than 2% by weight. For example, a typical fried potato chip exits the fryer at approximately 1.4% moisture by weight. The cooked potato chips are then transported to a seasoning step **25,** where seasonings are applied in a rotation drum. Finally, the seasoned chips proceed to a packaging step **26.** This packaging step **26** usually involves feeding the seasoned chips to one or more weighing devices that then direct chips to one or more vertical form, fill, and seal machines for packaging in a flexible package. Once packaged, the product goes into distribution and is purchased by a consumer.

Minor adjustments in a number of the potato chip processing steps described above can result in significant changes in the characteristics of the final product. For example, an extended residence time of the slices in water at the washing step **23** can result in leaching compounds from the slices that provide the end product with its potato flavor, color and texture. Increased residence times or heating temperatures at the cooking step **24** can result in an increase in the Maillard browning levels in the chip, as well as a lower moisture content. If it is desirable to incorporate ingredients into the potato slices prior to frying, it may be necessary to establish mechanisms that provide for the absorption of the added ingredients into the interior portions of the slices without disrupting the cellular structure of the chip or leaching beneficial compounds from the slice.

By way of another example of heated food products that represent unique challenges to reducing acrylamide levels in the final products, snacks can also be made from a dough. The term "fabricated snack" means a snack food that uses as its starting ingredient something other than the original and unaltered starchy starting material. For example, fabricated snacks include fabricated potato chips that use a dehydrated potato product as a starting material and corn chips that use masa flour as its starting material. It is noted here that the dehydrated potato product can be potato flour, potato flakes, potato granules, or other forms in which dehydrated potatoes exist. When any of these terms are used in this application, it is understood that all of these variations are included.

Referring back to Figure 2, a fabricated potato chip does not require the peeling step 21, the slicing step 22, or the washing step 23. Instead, fabricated potato chips start with, for example, potato flakes, which are mixed with water and other minor ingredients to form a dough. This dough is then sheeted and cut before proceeding to a cooking step. The cooking step may involve frying or baking. The chips then proceed to a seasoning step and a packaging step. The mixing of the potato dough generally lends itself to the easy addition of other ingredients. Conversely, the addition of such ingredients to a raw food product, such as potato slices, requires that a mechanism be found to allow for the penetration of ingredients into the cellular structure of the product. However, the addition of any ingredients in the mixing step must be done with the consideration that the ingredients may adversely affect the sheeting characteristics of the dough as well as the final chip characteristics.

Database WPI Week 199329 Derwent Publications Ltd., London, GB; AN 1993-234163 XP002473734 & SU 1750586 A1 (Interbios Res Assoc) 30 July 1992 (1992-07-30) discloses a composition for treatment of onion before drying which contains vegetable oil, citric acid, calcium chloride, calcium carbonate and water.

FR 874453 teaches a process for preparing food products in flakes by treating potato flow with calcium cation and lactic acid, then drying.

US 2004/058046 discloses a method for the reduction of acrylamide in food products, comprising adding to a food material an enzyme capable of hydrolyzing the amide group of free asparagine.

US 2004/058045 teaches the addition of one of a select group of divalent or trivalent cations to the recipe for food to inhibit the formation of acrylamide during the thermal processing.

EP-A-1419703 discloses a method for preventing acrylamide formation in heat-treated food, which method comprises blocking conversion of glycerol into acrylamide.

It would be desirable to develop one or more methods of reducing the level of acrylamide in the end product of heated or thermally processed foods. Ideally, such a process should substantially reduce or eliminate the acrylamide in the end product without adversely affecting the quality and characteristics of the end product. Further, the method should be easy to implement and, preferably, add little or no cost to the overall process.

### SUMMARY OF THE INVENTION

The present invention provides a method for lowering the level of acrylamide produced by the thermal processing of a dried food product, said method comprising the sequential steps of: a) disrupting the cellular structure of a starch-based food containing asparagine; b) adding two acrylamide-reducing agents to the starch-based food to form a mixture, wherein said acrylamide-reducing agents are: calcium chloride, and a food grade acid, c) drying said mixture to form said dried food product, d) using said dried food product to make a dough; and e) thermally processing said dough, wherein said starch-based food is potatoes and wherein said disrupting step comprises mashing said starch-based food.

In the inventive process of the instant application, the cellular structure of a starch-based food containing asparagines is disrupted, and acrylamide reducing agent is added to a starch-based food prior to drying. The starch based food is a potato. The agent can include calcium chloride and an acid or an amino acid. Also described herein are agents comprising a divalent or trivalent cation or combination of such cations. The agent can be added during milling, dry mix, wet mix, or other admix, so that the agents are present throughout the food product. In preferred embodiments, calcium cations are used in conjunction with phosphoric acid, citric acid, and/or cysteine. The combination of agents can be adjusted in order to reduce the acrylamide formation in the finished product to a desired level while minimally affecting the quality and characteristics of the end product.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
**Figure 1** illustrates a simplification of suspected pathways for the formation of acrylamide starting with asparagine and glucose.
**Figure 2** illustrates well-known prior art methods for making fried potato chips from raw potato stock.
**Figures 3A** and **3B** illustrate methods of making a fabricated snack food according to two separate embodiments of the invention.
**Figure 4** graphically illustrates the acrylamide levels found in a series of tests in which cysteine and lysine were added.
**Figure 5** graphically illustrates the acrylamide levels found in a series of tests in which CaCl₂ was combined with phosphoric acid or citric acid.
**Figure 6** graphically illustrates the acrylamide levels found in a series of tests in which CaCl₂ and phosphoric acid were added to potato flakes having various levels of reducing sugars.
**Figure 7** graphically illustrates the acrylamide levels found in a series of tests in which CaCl₂ and phosphoric acid were added to potato flakes.
**Figure 8** graphically illustrates the acrylamide levels found in a series of tests in which CaCl₂ and citric Acid were added to the mix for corn chips.
**Figure 9** graphically illustrates the acrylamide levels found in potato chips fabricated with cysteine, calcium chloride, and either phosphoric acid or citric acid.
**Figure 10** graphically illustrates the acrylamide levels found in potato chips when calcium chloride and phosphoric acid are added at either the flakes making step or the chip fabrication step.
**Figure 11** graphically illustrates the effect of asparaginase and buffering on acrylamide level in potato chips.
**Figure 12** graphically illustrates the acrylamide levels found in potato chips fried in oil containing rosemary.

### DETAILED DESCRIPTION

The formation of acrylamide in thermally processed foods requires a source of carbon and a source of nitrogen. It is hypothesized that carbon is provided by a carbohydrate source and nitrogen is provided by a protein source or amino acid source. Many plant-derived food ingredients such as rice, wheat, corn, barley, soy, potato and oats contain asparagine and are primarily carbohydrates having minor amino acid components. Typically, such food ingredients have a small amino acid pool, which contains other amino acids in addition to asparagine.

By "thermally processed" is meant food or food ingredients wherein components of the food, such as a mixture of food ingredients, are heated at temperatures of at least 80°C. Preferably the thermal processing of the food or food ingredients takes place at temperatures between about 100°C and 205°C. The food ingredient may be separately processed at elevated temperature prior to the formation of the final food product. An example of a thermally processed food ingredient is potato flakes, which is formed from raw potatoes in a process that exposes the potato to temperatures as high as 170°C. (The terms "potato flakes", "potato granules", and "potato flour" are used interchangeably herein, and are meant to denote any potato based, dehydrated product.) Examples of other thermally processed food ingredients include processed oats, par-boiled and dried rice, cooked soy products, corn masa, roasted coffee beans and roasted cacao beans. Alternatively, raw food ingredients can be used in the preparation of the final food product wherein the production of the final food product includes a thermal heating step. One example of raw material processing wherein the final food product results from a thermal heating step is the manufacture of potato chips from raw potato slices by the step of frying at a temperature of from about 100°C to about 205°C or the production of french fries fried at similar temperatures.

### Effect of Amino Acids on Acrylamide Formation (not according to the invention)

In accordance with the present invention, however, a significant formation of acrylamide has been found to occur when the amino acid asparagine is heated in the presence of a reducing sugar. Heating other amino acids such as lysine and alanine in the presence of a reducing sugar such as glucose does not lead to the formation of acrylamide. But, surprisingly, the addition of other amino acids to the asparagine-sugar mixture can increase or decrease the amount of acrylamide formed.

Having established the rapid formation of acrylamide when asparagine is heated in the presence of a reducing sugar, a reduction of acrylamide in thermally processed foods can be achieved by inactivating the asparagine. By "inactivating" is meant removing asparagine from the food or rendering asparagine non-reactive along the acrylamide formation route by means of conversion or binding to another chemical that interferes with the formation of acrylamide from asparagine.

### I. Effect of Cysteine, Lysine, Glutamine and Glycine on Acrylamide Formation (not according to the invention)

Since asparagine reacts with glucose to form acrylamide, increasing the concentration of other free amino acids may affect the reaction between asparagine with glucose and reduce acrylamide formation. For this experiment, a solution of asparagine (0.176 %) and glucose (0.4%) was prepared in pH 7.0 sodium phosphate buffer. Four other amino acids, glycine (GLY), lysine (LYS), glutamine (GLN), and cysteine (CYS) were added at the same concentration as glucose on a molar basis. The experimental design was full factorial without replication so all possible combinations of added amino acids were tested. The solutions were heated at 120°C for 40 minutes before measuring acrylamide. **Table 1** below shows the concentrations and the results.

**Table 1: Effect of Cysteine, Lysine, Glutamine and Glycine on Acrylamide Formation**

| | **Glucose** | **ASN** | **GLY** | **LYS** | **GLN** | **CYS** | **Acrylamide** |
|---|---|---|---|---|---|---|---|
| Order | % | % | % | % | % | % | ppb |
| 1 | 0.4 | 0.176 | 0 | 0 | 0 | 0 | 1679 |
| 2 | 0.4 | 0.176 | 0 | 0 | 0 | 0.269 | 4 |
| 3 | 0.4 | 0.176 | 0 | 0 | 0.324 | 0 | 5378 |
| 4 | 0.4 | 0.176 | 0 | 0 | 0.324 | 0.269 | 7 |
| 5 | 0.4 | 0.176 | 0 | 0.325 | 0 | 0 | 170 |
| 6 | 0.4 | 0.176 | 0 | 0.325 | 0 | 0.269 | 7 |
| 7 | 0.4 | 0.176 | 0 | 0.325 | 0.324 | 0 | 1517 |
| 8 | 0.4 | 0.176 | 0 | 0.325 | 0.324 | 0.269 | 7 |
| 9 | 0.4 | 0.176 | 0.167 | 0 | 0 | 0 | 213 |
| 10 | 0.4 | 0.176 | 0.167 | 0 | 0 | 0.269 | 6 |
| 11 | 0.4 | 0.176 | 0.167 | 0 | 0.324 | 0 | 2033 |
| 12 | 0.4 | 0.176 | 0.167 | 0 | 0.324 | 0.269 | 4 |
| 13 | 0.4 | 0.176 | 0.167 | 0.325 | 0 | 0 | 161 |
| 14 | 0.4 | 0.176 | 0.167 | 0.325 | 0 | 0.269 | 4 |
| 15 | 0.4 | 0.176 | 0.167 | 0.325 | 0.324 | 0 | 127 |
| 16 | 0.4 | 0.176 | 0.167 | 0.325 | 0.324 | 0.269 | 26 |

As shown in the table above, glucose and asparagine without any other amino acid formed 1679 ppb acrylamide. The added amino acids had three types of effects.
1) Cysteine almost eliminated acrylamide formation. All treatments with cysteine had less than 25 ppb acrylamide (a 98% reduction).
2) Lysine and glycine reduced acrylamide formation but not as much as cysteine. All treatments with lysine and/or glycine but without glutamine and cysteine had less than 220 ppb acrylamide (a 85% reduction).
3) Surprisingly, glutamine increased acrylamide formation to 5378 ppb (200% increase). Glutamine plus cysteine did not form acrylamide. Addition of glycine and lysine to glutamine reduced acrylamide formation.

These tests demonstrate the effectiveness of cysteine, lysine, and glycine in reducing acrylamide formation. However, the glutamine results demonstrate that not all amino acids are effective at reducing acrylamide formation. The combination of cysteine, lysine, or glycine with an amino acid that alone can accelerate the formation of acrylamide (such as glutamine) can likewise reduce the acrylamide formation.

### II. Effect of Cysteine, Lysine, Glutamine, and Methionine at Different Concentrations and Temperatures (not according to the invention)

As reported above, cysteine and lysine reduced acrylamide when added at the same concentration as glucose. A follow up experiment was designed to answer the following questions:
1) How do lower concentrations of cysteine, lysine, glutamine, and methionine effect acrylamide formation?
2) Are the effects of added cysteine and lysine the same when the solution is heated at 120°C and 150°C?

A solution of asparagine (0.176 %) and glucose (0.4%) was prepared in pH 7.0 sodium phosphate buffer. Two concentrations of amino acid (cysteine (CYS), lysine (LYS), glutamine (GLN), or methionine (MET)) were added. The two concentrations were 0.2 and 1.0 moles of amino acid per mole of glucose. In half of the tests, two ml of the solutions were heated at 120°C for 40 minutes; in the other half, two ml were heated at 150°C for 15 minutes. After heating, acrylamide was measured by GC-MS, with the results shown in **Table 2**. The control was asparagine and glucose solution without an added amino acid.

**Table 2: Effect of Temperature and Concentration of Amino Acids on Acrylamide Level**

| | **Acrylamide level** | | | | |
|---|---|---|---|---|---|
| **Amino acid/ Temperature** | **Control** | **Amino Acid @ Conc. 0.2** | **Percentage Of Control** | **Amino Acid @ Conc. 1.0** | **Percentage Of Control** |
| **LYS-120°C** | 1332 ppb | 1109 ppb | 83% | 280 ppb | 21% |
| **CYS-120°C** | 1332 ppb | 316 ppb | 24% | 34 ppb | 3% |
| **LYS-150°C** | 3127 ppb | 1683 ppb | 54% | 536 ppb | 17% |
| **CYS-150°C** | 3127 ppb | 1146 ppb | 37% | 351 ppb | 11% |
| **GLN-120°C** | 1953 ppb | 4126 ppb | 211% | 6795 ppb | 348% |
| **MET-120°C** | 1953 ppb | 1978 ppb | 101% | 1132 ppb | 58% |
| **GLN-150°C** | 3866 ppb | 7223 ppb | 187% | 9516 ppb | 246% |
| **MET-150°C** | 3866 ppb | 3885 ppb | 100% | 3024 ppb | 78% |

In the tests with cysteine and lysine, a control formed 1332 ppb of acrylamide after 40 minutes at 120°C, and 3127 ppb of acrylamide after 15 minutes at 150°C. Cysteine and lysine reduced acrylamide formation at 120°C and 150°C, with the acrylamide reduction being roughly proportional to the concentration of added cysteine or lysine.

In the tests with glutamine and methionine, a control formed 1953 ppb of acrylamide after 40 minutes at 120°C and a control formed 3866 ppb of acrylamide after 15 minutes at 150°C. Glutamine increased acrylamide formation at 120°C and 150°C. Methionine at 0.2 mole/mole of glucose did not affect acrylamide formation. Methionine at 1.0 mole/mole of glucose reduced acrylamide formation by less than fifty percent.

### III. Effect of Nineteen Amino Acids on Acrylamide Formation in Glucose and Asparagine Solution (not according to the invention)

The effect of four amino acids (lysine, cysteine, methionine, and glutamine) on acrylamide formation was described above. Fifteen additional amino acids were tested. A solution of asparagine (0.176 %) and glucose (0.4%) was prepared in pH 7.0 sodium phosphate buffer. The fifteen amino acids were added at the same concentration as glucose on a molar basis. The control contained asparagine and glucose solution without any other amino acid. The solutions were heated at 120°C for 40 minutes before measuring acrylamide by GC-MS. The results are given in **Table 3** below.

**Table 3: Effect of Other Amino Acids on Acrylamide Formation**

| | **Acrylamide Formed** | |
|---|---|---|
| **Amino Acid** | **ppb** | **% of Control** |
| Control | 959 | 100 |
| Histidine | 215 | 22 |
| Alanine | 478 | 50 |
| Methionine | 517 | 54 |
| Glutamic Acid | 517 | 54 |
| Aspartic Acid | 529 | 55 |
| Proline | 647 | 67 |
| Phenylalanine | 648 | 68 |
| Valine | 691 | 72 |
| Arginine | 752 | 78 |
| Tryptophan | 1059 | 111 |
| Threonine | 1064 | 111 |
| Tyrosine | 1091 | 114 |
| Leucine | 1256 | 131 |
| Serine | 1296 | 135 |
| Isoleucine | 1441 | 150 |

As seen in the table above, none of the fifteen additional amino acids were as effective as cysteine, lysine, or glycine in reducing acrylamide formation. Nine of the additional amino acids reduced acrylamide to a level between 22-78% of control, while six amino acids increased acrylamide to a level between 111-150 % of control.

**Table 4** below summarizes the results for all amino acids, listing the amino acids in the order of their effectiveness. Cysteine, lysine, and glycine were effective inhibitors, with the amount of acrylamide formed less than 15% of that formed in the control. The next nine amino acids were less effective inhibitors, having a total acrylamide formation between 22-78% of that formed in the control. The next seven amino acids increased acrylamide. Glutamine caused the largest increase of acrylamide, showing 320% of control.

**Table 4: Acrylamide Formation in the Presence of 19 Amino Acids**

| **Amino Acid** | **Acrylamide produced as % of Control** |
|---|---|
| Control | 100% |
| Cysteine | 0% |
| Lysine | 10% |
| Glycine | 13 % |
| Histidine | 22 % |
| Alanine | 50 % |
| Methionine | 54 % |
| Glutamic Acid | 54 % |
| Aspartic Acid | 55 % |
| Proline | 67 % |
| Phenylalanine | 68 % |
| Valine | 72% |
| Arginine | 78 % |
| Tryptophan | 111 % |
| Threonine | 111 % |
| Tyrosine | 114 % |
| Leucine | 131 % |
| Serine | 135 % |
| Isoleucine | 150 % |
| Glutamine | 320 % |

### IV. Potato Flakes with 750 ppm of Added L-Cysteine (not according to the invention)

Test potato flakes were manufactured with 750 ppm (parts per million) of added L-cysteine. The control potato flakes did not contain added L-cysteine. Three grams of potato flakes were weighed into a glass vial. After tightly capping, the vials were heated for 15 minutes or 40 minutes at 120°C. Acrylamide was measured by GC-MS in parts per billion (ppb).

**Table 5: Reduction of Acrylamide over Time with Cysteine**

| **Potato Flakes** | **Acrylamide (ppb) 15 Min at 120°C** | **Acrylamide Reduction 15 Min** | **Acrylamide (ppb) 40 Min at 120°C** | **Acrylamide Reduction 40 Min** |
|---|---|---|---|---|
| **Control** | 1662 | -- | 9465 | -- |
| **750 ppm Cysteine** | 653 | 60% | 7529 | 20% |

### V. Baked Fabricated Potato Chips (not according to the invention)

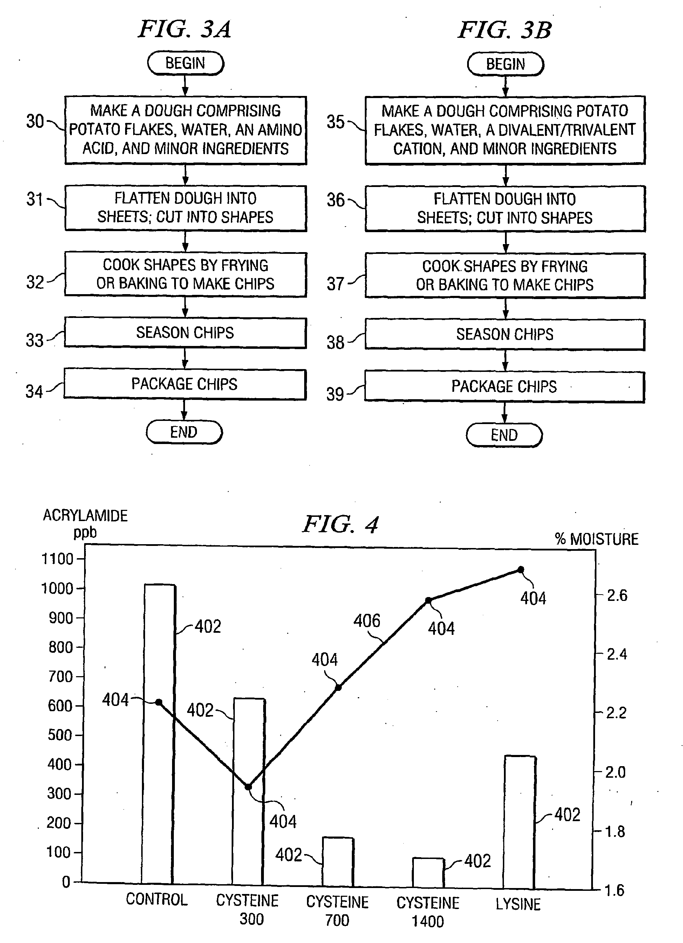

Described herein are formulae in which cysteine or lysine was added to the formula for a fabricated snack food, in this case baked, fabricated potato chips. The process for making this product is shown in **Figure 3A****.** In a dough preparation step **30**, potato flakes, water, and other ingredients are combined to form a dough. (The terms "potato flakes" and "potato flour" are used interchangeably herein and either are intended to encompass all dried flake or powder preparations, regardless of particle size.) In a sheeting step **31,** the dough is run through a sheeter, which flattens the dough, and is then cut into discrete pieces. In a cooking step **32,** the cut pieces are baked until they reach a specified color and water content The resulting chips are then seasoned in a seasoning step **33** and placed in packages in a packaging step **34.**

Also described herein is use of the process described above. To illustrate this a comparison is made between a control and test batches to which were added either one of three concentrations of cysteine or one concentration of lysine.

**Table 6: Effect of Lysine and Various Levels of Cysteine on Acrylamide Level**

| **Ingredient** | | **Control** | **Cysteine #1** | **Cysteine #2** | **Cysteine #3** | **Lysine** |
|---|---|---|---|---|---|---|
| **Potato flakes & modified starch (g)** | | 5496 | 5496 | 5496 | 5496 | 5496 |
| **Sugar (g)** | | 300 | 300 | 300 | 300 | 300 |
| **Oil (g)** | | 90 | 90 | 90 | 90 | 90 |
| **Leavening agents (g)** | | 54 | 54 | 54 | 54 | 54 |
| **Emulsifier (g)** | | 60 | 60 | 60 | 60 | 60 |
| **L-Cysteine (dissolved in water)¹ (g)** | | 0 | 1.8 | 4.2 | 8.4 | 0 |
| **L-Lysine monohydrochloride (g)** | | 0 | 0 | 0 | 0 | 42 |
| **Total Dry (g)** | | 6000 | 6001.8 | 6004.2 | 6008.4 | 6042 |
| **Water (ml)** | | 3947 | 3947 | 3947 | 3947 | 3947 |

| **Measurements after Cooking Chips** | | | | | | |
|---|---|---|---|---|---|---|
| **H₂O, %** | | 2.21 | 1.73 % | 2.28 % | 2.57 % | 2.68 % |
| **Oil, %** | | 1.99 | 2.15 % | 2.05 % | 2.12% | 1.94 % |
| **Acrylamide (ppb)** | | **1030** | **620** | **166** | **104** | **456** |
| **Color** | **L** | 72.34 | 76.53 | 79.02 | 78.36 | **73.2** |
| | **A** | 1.99 | -1.14 | -2.02 | -2.14 | 1.94 |
| | **B** | 20.31 | 25.52 | 23.2 | 23.0 | 25.77 |

In all batches, the dry ingredients were first mixed together, then oil was added to each dry blend and mixed. The cysteine or lysine was dissolved in the water prior to adding to the dough. The moisture level of the dough prior to sheeting was 40% to 45% by weight. The dough was sheeted to produce a thickness of between 0.020 and 0.030 inches, cut into chip-sized pieces, and baked.

After cooking, testing was performed for moisture, oil, and color according to the Hunter L-A-B scale. Samples were tested to obtain acrylamide levels in the finished product. **Table 6** above shows the results of these analyses.

In the control chips, the acrylamide level after final cooking was 1030 ppb. Both the addition of cysteine, at all the levels tested, and lysine reduced the final acrylamide level significantly. **Figure 4** shows the resulting acrylamide levels in graphical form. In this drawing, the level of acrylamide detected in each sample is shown by a shaded bar **402**. Each
1 It is expected that the D- isomer or a racemic mixture of both the D- and L- isomers of the amino acids wound be equally effective, although the L- isomer is likely to be the best and least expensive source. bar has a label listing the appropriate test immediately below and is calibrated to the scale for acrylamide on the left of the drawing. Also shown for each test is the moisture level of the chip produced, seen as a single point **404.** The values for points **404** are calibrated to the scale for percentage of moisture shown on the right of the drawing. Line **406** connects the individual points **404** for greater visibility. Because of the marked effect of lower moisture on the level of acrylamide, it is important to have a moisture level in order to properly evaluate the activity of any acrylamide-reducing agents. As used herein, an acrylamide reducing agent is an additive that reduces acrylamide content.

Adding cysteine or lysine to the dough significantly lowers the level of acrylamide present in the finished product. The cysteine samples show that the level of acrylamide is lowered in roughly a direct proportion to the amount of cysteine added. Consideration must be made, however, for the collateral effects on the characteristics (such as color, taste, and texture) of the final product from the addition of an amino acid to the manufacturing process.

Additional tests were also run, using added cysteine, lysine, and combinations of each of the two amino acids with CaCl₂. These tests used the same procedure as described in the tests above, but used potato flakes having varying levels of reducing sugars and varying amounts of amino acids and CaCl₂ added. In **Table 7** below, lot 1 of potato flakes had 0.81 % reducing sugars (this portion of the table reproduces the results from the test shown above), lot 2 had 1.0% and lot 3 had 1.8% reducing sugars.

**Table 7: Effect of Varying Concentration of Cysteine, Lysine, Reducing Sugars**

| **Reducing Sugar %** | **CaCl2 Wt % of total dry** | **Cysteine ppm of total dry** | **Lysine % of total dry** | **Finish H2O wt %** | **Finish color value** | **Acrylamide ppb** |
|---|---|---|---|---|---|---|
| 0.81 | 0 | 0 | 0 | 2.21 | 72.34 | 1030 |
| 0.81 | 0 | 300 | 0 | 1.73 | 76.53 | 620 |
| 0.81 | 0 | 700 | 0 | 2.28 | 79.02 | 166 |
| 0.81 | 0 | 1398 | 0 | 2.57 | 78.36 | 104 |
| 0.81 | 0 | 0 | 0.685 | 2.68 | 73.20 | 456 |
| 1.0 | 0 | 0 | 0 | 1.71 | 72.68 | 599 |
| 1.0 | 0. | 0 | 0 | 1.63 | 74.44 | 1880 |
| 1.0 | 0 | 0 | 0 | 1.69 | 71.26 | 1640 |
| 1.0 | 0 | 0 | 0 | 1.99 | 71.37 | 1020 |
| 1.0 | 0 | 700 | 0 | 2.05 | 75.81 | 317 |
| 1.0 | 0.646 | 0 | 0.685 | 1.74 | 73.99 | 179 |
| 1.8 | 0 | 0 | 0 | 1.80 | 73.35 | 464 |
| 1.8 | 0 | 0 | 0 | 1.61 | 72.12 | 1060 |
| 1.8 | 0 | 700 | 0 | 1.99 | 75.27 | 290 |
| 1.8 | 0 | 1398 | 0 | 1.96 | 75.87 | 188 |
| 1.8 | 0 | 0 | 0.685 | 1.90 | 76.17 | 105 |
| 1.8 | 0.646 | 0 | 0.685 | 2.14 | 75.87 | 47 |
| 1.8 | 0.646 | 700 | 0 | 1.83 | 77.23 | 148 |

As shown by the data in this table, the addition of either cysteine or lysine provides significant improvement in the level of acrylamide at each level of reducing sugars tested. The combination of lysine with calcium chloride provided an almost total elimination of acrylamide produced, despite the fact that this test was run with the highest level of reducing sugars.

### VI. Tests in Sliced, Fried Potato Chips (not according to the invention)

A similar result can be achieved with potato chips made from potato slices. However, the desired amino acid cannot be simply mixed with the potato slices, as illustrated above, since this would destroy the integrity of the slices. In one test, the potato slices are immersed in an aqueous solution containing the desired amine acid additive for a period of time sufficient to allow the amino acid to migrate into the cellular structure of the potato slices. This can be done, for example, during the washing step **23** illustrated in **Figure 2****.**

**Table 8** below shows the result of adding one weight percent of cysteine to the wash treatment that was described in step **23** of **Figure 2** above. All washes were at room temperature for the time indicated; the control treatments had nothing added to the water. The chips were fried in cottonseed oil at 178°C for the indicated time.

**Table 8: Effect of Cysteine in Wash Water of Potato Slices on Acrylamide**

| | **Fry Time (seconds)** | **Finished H₂O wt %** | **Finished oil wt %** | **Finished Acrylamide** |
|---|---|---|---|---|
| **Control - 2-3 min wash** | 140 | 1.32 % | 42.75 % | 323 ppb |
| **1 % cysteine - 15 min wash** | 140 | .86 % | 45.02 % | 239 ppb |
| **Control - 2-3 min wash** | 110 | 1.72 % | 40.87% | 278 ppb |
| **Control - 15 min wash** | 110 | 1.68 % | 41.02 % | 231 ppb |
| **1% Cysteine - 15 min wash** | 110 | 1.41 % | 44.02 % | 67 ppb |

As shown in this table, immersing potato slices of .053 inch thickness for 15 minutes in an aqueous solution containing a concentration of one weight percent of cysteine is sufficient to reduce the acrylamide level of the final product on the order of 100-200 ppb.

Also described herein is the addition of cysteine to the corn dough (or masa) for tortilla chips. Dissolved L-cysteine was added to cooked corn during the milling process so that cysteine was uniformly distributed in the masa produced during milling. The addition of 600 ppm of L-cysteine reduced acrylamide from 190 ppb in the control product to 75 ppb in the L-cysteine treated product

Any number of amino acids can be used with the invention disclosed herein, as long as adjustments are made for the collateral effects of the additional ingredient(s), such as changes to the color, taste, and texture of the food. Although all examples shown utilize α-amino acids (where the -NH₂ group is attached to the alpha carbon atom), the applicants anticipate that other isomers, such as β- or γ-amino acids can also be used, although β- and γ-amino acids are not commonly used as food additives.

Cysteine, lysine, and/or glycine are preferred. However, other amino acids, such as histidine, alanine, methionine, glutamic acid, aspartic acid, proline, phenylalanine, valine, and arginine may also be used. Such amino acids, and in particular cysteine, lysine, and glycine, are relatively inexpensive and commonly used as food additives. These preferred amino acids can be used alone or in combination in order to reduce the amount of acrylamide in the final food product. Further, the amino acid can be added to a food product prior to heating by way of either adding the commercially available amino acid to the starting material of the food product or adding another food ingredient that contains a high concentration level of the free amino acid. For example, casein contains free lysine and gelatin contains free glycine. Thus, when Applicants indicate that an amino acid is added to a food formulation, it will be understood that the amino acid may be added as a commercially available amino acid or as a food having a concentration of the free amino acid(s) that is greater than the naturally occurring level of asparagine in the food.

The amount of amino acid that should be added to the food in order to reduce the acrylamide levels to an acceptable level can be expressed in several ways. In order to be commercially acceptable, the amount of amino acid added should be enough to reduce the final level of acrylamide production by at least twenty percent (20%) as compared to a product that is not so treated. More preferably, the level of acrylamide production should be reduced by an amount in the range of thirty-five to ninety-five percent (35-95%). Even more preferably, the level of acrylamide production should be reduced by an amount in the range of fifty to ninety-five percent (50-95%). In using cysteine, it has been determined that the addition of at least 100 ppm can be effective in reducing acrylamide. However, a preferred range of cysteine addition is between 100 ppm and 10,000 ppm, with the most preferred range in the amount of about 1,000 ppm. In using other effective amino acids, such as lysine and glycine, a mole ratio of the added amino acid to the reducing sugar present in the product of at least 0.1 mole of amino acid to one mole of reducing sugars (0.1:1) has been found to be effective in reducing acrylamide formation. More preferably the molar ratio of added amino acid to reducing sugars should be between 0.1:1 and 2:1, with a most preferable ratio of about 1:1.

The mechanisms by which the select amino acids reduce the amount of acrylamide found are not presently known. Possible mechanisms include competition for reactant and dilution of the precursor, which will create less acrylamide, and a reaction mechanism with acrylamide to break it down." Possible mechanisms include (1) inhibition of Maillard reaction, (2) consumption of glucose and other reducing sugars, and (3) reaction with acrylamide. Cysteine, with a free thiol group, acts as an inhibitor of the Maillard reaction. Since acrylamide is believed to be formed from asparagine by the Maillard reaction, cysteine should reduce the rate of the Maillard reaction and acrylamide formation. Lysine and glycine react rapidly with glucose and other reducing sugars. If glucose is consumed by lysine and glycine, there will be less glucose to react with asparagine to form acrylamide. The amino group of amino acids can react with the double bond of acrylamide, a Michael addition. The free thiol of cysteine can also react with the double bond of acrylamide.

It should be understood that adverse changes in the characteristics of the final product, such as changes in color, taste, and texture, could be caused by the addition of an amino acid. These changes in the characteristics of the product can be compensated by various other means. For example, color characteristics in potato chips can be adjusted by controlling the amount of sugars in the starting product Some flavor characteristics can be changed by the addition of various flavoring agents to the end product. The physical texture of the product can be adjusted by, for example, the addition of leavening agents or various emulsifiers.

### Effect of Di- and Trivalent Cations on Acrylamide Formation

Also described herein is reducing the production of acrylamide by the addition of a divalent or trivalent cation to a formula for a snack food prior to the cooking or thermal processing of that snack food. Chemists will understand that cations do not exist in isolation, but are found in the presence of an anion having the same valence. Although reference is made herein to the salt containing the divalent or trivalent cation, it is the cation present in the salt that is believed to provide a reduction in acrylamide formation by reducing the solubility of asparagine in water. These cations are also referred to herein as a cation with a valence of at least two. Interestingly, cations of a single valence are not effective in use with the present invention. In choosing an appropriate compound containing the cation having a valence of at least two in combination with an anion, the relevant factors are water solubility, food safety, and least alteration to the characteristics of the particular food. Combinations of various salts can be used, even though they are discussed herein only as individuals salts.

Chemists speak of the valence of an atom as a measure of its ability to combine with other elements. Specifically, a divalent atom has the ability to form two ionic bonds with other atoms, while a trivalent atom can form three ionic bonds with other atoms. A cation is a positively charged ion, that is, an atom that has lost one or more electrons, giving it a positive charge. A divalent or trivalent cation, then, is a positively charged ion that has availability for two or three ionic bonds, respectively.

Simple model systems can be used to test the effects of divalent or trivalent cations on acrylamide formation. Heating asparagine and glucose in 1:1 mole proportions can generate acrylamide. Quantitative comparisons of acrylamide content with and without an added salt measures the ability of the salt to promote or inhibit acrylamide formation. Two sample preparation and heating methods were used. One method involved mixing the dry components, adding an equal amount of water, and heating in a loosely capped vial. Reagents concentrated during heating as most of the water escaped, duplicating cooking conditions. Thick syrups or tars can be produced, complicating recovery of acrylamide. These tests are shown in Examples 1 and 2 below.

A second method using pressure vessels allowed more controlled experiments. Solutions of the test components were combined and heated under pressure. The test components can be added at the concentrations found in foods, and buffers can duplicate the pH of common foods. In these tests, no water escapes, simplifying recovery of acrylamide, as shown in Example 3 below.

### I. Divalent, Trivalent Cations Decrease Acrylamide, Monovalent Don't

A 20 mL (milliliter) glass vial containing L-asparagine monohydrate (0.15 g, 1 mmole), glucose (0.2 g, 1 mmole) and water (0.4 mL) was covered with aluminum foil and heated in a gas chromatography (GC) oven programmed to heat from 40° to 220°C at 20°/minute, hold two minutes at 220°C, and cool from 220° to 40°C at 20°/min. The residue was extracted with water and analyzed for acrylamide using gas chromatography-mass spectroscopy (GC-MS). Analysis found approximately 10,000 ppb (parts/billion) acrylamide. Two additional vials containing L-asparagine monohydrate (0.13 g, 1 mmole), glucose (0.2 g, 1 mmole), anhydrous calcium chloride (0.1 g, 1 mmole) and water (0.4 mL) were heated and analyzed. Analysis found 7 and 30 ppb acrylamide, a greater than ninety-nine percent reduction.

Given the surprising result that calcium salts strongly reduced acrylamide formation, further screening of salts was performed and identified divalent and trivalent cations (magnesium, aluminum) as producing a similar effect. It is noted that similar experiments with monovalent cations, i.e. 0.1/0.2 g sodium bicarbonate and ammonium carbonate (as ammonium carbamate and ammonium bicarbonate) increased acrylamide formation, as seen in **Table 9** below.

**Table 9**

| Salt | Micro Mole Salt | Micromole Acrylamide after heating, ppb |
|---|---|---|
| None (control) | 0 | 98577 |
| Sodium bicarbonate | 1200 | 13419 |
| Ammonium carbonate | 1250 | 22027 |
| Ammonium carbonate | 2500 | 47897 |

### II. Calcium Chloride and Magnesium Chloride

In a second experiment, a similar test to that described above was performed, but instead of using anhydrous calcium chloride, two different dilutions of each of calcium chloride and magnesium chloride were used. Vials containing L-asparagine monohydrate (0.15 g, 1 mmole) and glucose (0.2 g, 1 mmole) were mixed with one of the following:
0.5 mL water (control),
0.5 mL 10% calcium chloride solution (0.5 mmole),
0.05 mL 10% calcium chloride solution (0.05 mmole) plus 0.45 mL water,
0.5 mL 10% magnesium chloride solution (0.5 mmole), or
0.05 mL 10% magnesium chloride solution (0.05 mmole) plus 0.45 mL water. Duplicate samples were heated and analyzed as described in Example 1. Results were averaged and summarized in **Table 10** below:

**Table 10: Effect of Calcium Chloride, Magnesium Chloride on Acrylamide**

| Salt ID | Amt added Micromoles | Acrylamide formed Micromoles | Acrylamide reduction |
|---|---|---|---|
| None (control) | 0 | 408 | 0 |
| Calcium chloride | 450 | 293 | 27% |
| Calcium chloride | 45 | 864 | None |
| Magnesium chloride | 495 | 191 | 53% |
| Magnesium chloride | 50 | 2225 | None |

### III. pH and Buffering Effects

As mentioned above, this test did not involve the loss of water from the container, but was done under pressure. Vials containing 2 mL of buffered stock solution (15 mM asparagine, 15 mM glucose, 500 mM phosphate or acetate) and 0.1 mL salt solution (1000 mM) were heated in a Parr bomb placed in a gas chromatography oven programmed to heat from 40 to 150°C at 20°/minute and hold at 150°C for 2 minutes. The bomb was removed from the oven and cooled for 10 minutes. The contents were extracted with water and analyzed for acrylamide following the GC-MS method. For each combination of pH and buffer, a control was run without an added salt, as well as with the three different salts. Results of duplicate tests were averaged and summarized in Table 3 below:

**Table 11: Effect of pH and Buffer on Divalent/Trivalent Cations Reduction of Acrylamide**

| **Salt with Divalent or Trivalent Cation** | **pH** | **Buffer Used** | **Mcg Acrylamide** | | **Acrylamide Reduction** |
|---|---|---|---|---|---|
| | | | **Salt added** | **Control** | |
| Calcium chloride | 5.5 | Acetate | 337 | 550 | 19% |
| Calcium chloride | 7.0 | Acetate | 990 | 1205 | 18% |
| Calcium chloride | 5.5 | Phosphate | 154 | 300 | 49% |
| Calcium chloride | 7.0 | Phosphate | 762 | 855 | 11% |
| Magnesium chloride | 5.5 | Acetate | 380 | 550 | 16% |
| Magnesium chloride | 7.0 | Acetate | 830 | 1205 | 31% |
| Magnesium chloride | 5.5 | Phosphate | 198 | 300 | 34% |
| Magnesium chloride | 7.0 | Phosphate | 773 | 855 | 10% |
| Potassium aluminum sulfate | 5.5 | Acetate | 205 | 550 | 31% |
| Potassium aluminum sulfate | 7.0 | Acetate | 453 | 1205 | 62% |
| Potassium aluminum sulfate | 5.5 | Phosphate | 64 | 300 | 79% |
| Potassium aluminum sulfate | 7.0 | Phosphate | 787 | 855 | 8% |

Across the three salts used, the greatest reductions occurred in pH 7 acetate and pH 5.5 phosphate. Only small reductions were found in pH 5.5 acetate and pH 7 phosphate.

### IV. Raising Calcium Chloride Lowers Acrylamide

Following the model systems results, a small-scale laboratory test was run in which calcium chloride was added to potato flakes before heating. Three ml of a 0.4%, 2%, or 10% calcium chloride solution was added to 3 g of potato flakes. The control was 3 g of potato flakes mixed with 3 ml of de-ionized water. The flakes were mixed to form a relatively uniform paste and then heated in a sealed glass vial at 120° C for 40 min. Acrylamide after heating was measured by GC-MS. Before heating, the control potato flakes contained 46 ppb of acrylamide. Test results are reflected in Table 4 below.

**Table 12:Effect of Calcium Chloride Solution Strength on Acrylamide Reduction**

| **Mixture ID** | **Acrylamide, ppb** | **Acrylamide Reduction** |
|---|---|---|
| Control (water) | 2604 | None |
| CaCl₂ 0.4% solution | 1877 | 28% |
| CaCl₂ 2% solution | 338 | 76% |
| CaCl₂ 10% solution | 86 | 97% |

Given the results from above, tests were conducted in which a calcium salt was added to the formula for a fabricated snack food, in this case baked fabricated potato chips. The process for making baked fabricated potato chips consists of the steps shown in **Figure 3****B.** The dough preparation step **35** combines potato flakes with water, the cation/anion pair (which in this case is calcium chloride) and other minor ingredients, which are thoroughly mixed to form a dough. (Again, the term "potato flakes" is intended herein to encompass all dried potato flake, granule, or powder preparations, regardless of particle size.) In the sheeting/cutting step **36**, the dough is run through a sheeter, which flattens the dough, and then is cut into individual pieces. In the cooking step **37**, the formed pieces are cooked to a specified color and water content. The resultant chips are then seasoned in seasoning step **38** and packaged in packaging step **39.**

In a first test, two batches of fabricated potato chips were prepared and cooked according to the recipe given in **Table 13**; with the only difference between the batches was that the test batch contained calcium chloride. In both batches, the dry ingredients were first mixed together, then oil was added to each dry blend and mixed. The calcium chloride was dissolved in the water prior to adding to the dough. The moisture level of the dough prior to sheeting was 40% to 45% by weight. The dough was sheeted to produce a thickness of between 0.020 and 0.030 inches, cut into chip-sized pieces, and baked.

After cooking, testing was performed for moisture, oil, and color according to the Hunter L-a-b scale. Samples were tested to obtain acrylamide levels in the finished product. **Table 13** below also shows the results of these analyses.

**Table 13: Effect of CaCl₂ on Acrylamide in Chips**

| **Ingredient** | **Control** | **CaCl₂ Test** |
|---|---|---|
| Potato flakes and modified starch (g) | 5496 | 5496 |
| Sugar (g) | 300 | 300 |
| Oil (g) | 90 | 90 |
| Leavening agents (g) | 54 | 54 |
| Emulsifier (g) | 60 | 60 |
| Calcium Chloride (dissolved in water) (g) | 0 | 39 |
| Total Dry Mix (g) | 6000 | 6039 |
| Water (ml) | 3947 | 3947 |

| Tests Performed after Chips Cooked | | |
|---|---|---|
| H2O, % | 2.21 | 2.58 |
| Oil, % | 1.99 | 2.08 |
| **Acrylamide, ppb** | **1030** | **160** |
| L | 72.34 | 76.67 |
| A | 1.99 | -.67 |
| B | 20.31 | 24.21 |

As these results show, the addition of calcium chloride to the dough in a ratio by weight of calcium chloride to potato flakes of roughly 1 to 125 significantly lowers the level of acrylamide present in the finished product, lowering the final acrylamide levels from 1030 ppb to 160 ppb. Additionally, the percentages of oil and water in the final product do not appear to have been affected by the addition of calcium chloride. It is noted, however, that CaCl₂ can cause changes in the taste, texture, and color of the product, depending on the amount used.

The level of divalent or trivalent cation that is added to a food for the reduction of acrylamide can be expressed in a number of ways. In order to be commercially acceptable, the amount of cation added should be enough to reduce the final level of acrylamide production by at least twenty percent (20%). More preferably, the level of acrylamide production should be reduced by an amount in the range of thirty-five to ninety-five percent (35-95%). Even more preferably, the level of acrylamide production should be reduced by an amount in the range of fifty to ninety-five percent (50-95%). To express this in a different manner, the amount of divalent or trivalent cation to be added can be given as a ratio between the moles of cation to the moles of free asparagine present in the food product. The ratio of the moles of divalent or trivalent cation to moles of free asparagine should be at least one to five (1:5). More preferably, the ratio is at least one to three (1:3), and more preferably still, one to two (1:2). In the presently preferred embodiment, the ratio of moles of cations to moles of asparagine is between about 1:2 and 1:1. In the case of magnesium, which has less effect on the product taste than calcium, the molar ratio of cation to asparagine can be as high as about two to one (2:1).

Additional tests were run, using the same procedure as described above, but with different lots of potato flakes containing different levels of reducing sugars and varying amounts of calcium chloride added. In Table 14 below, the chips having 0.8 % reducing sugars reproduce the test shown above.

**Table 14: Effect of CaCl₂ Across Varying Levels of Reducing Sugars & Cation Levels**

| **CaCl₂ (g)** | **Reducing Sugar %** | **Moisture %** | **Color L Value** | **Acrylamide ppb** |
|---|---|---|---|---|
| 0 | 0.8 | 2.21 | 72.34 | **1030** |
| 39 | 0.8 | 2.58 | 76.67 | **160** |
| 0 | 1.0 | 1.80 | 73.35 | **464** |
| 0 | 1.0 | 1.61 | 72.12 | **1060** |
| 17.5 | 1.0 | 1.82 | 74.63 | **350** |
| 39 | 1.0 | 2.05 | 76.95 | **80** |
| 39 | 1.0 | 1.98 | 75.86 | **192** |
| 0 | 1.8 | 1.99 | 71.37 | **1020** |
| 0 | 1.8 | 1.71 | 72.68 | **599** |
| 0 | 1.8 | 1.69 | 71.26 | **1640** |
| 0 | 1.8 | 1.63 | 74.44 | **1880** |
| 39 | 1.8 | 1.89 | 76.59 | **148** |
| 39 | 1.8 | 1.82 | 75.14 | **275** |

As seen in this table, the addition of CaCl₂ consistently reduces the level of acrylamide in the final product, even when the weight ratio of added CaCl₂ to potato flakes is lower than 1:250.

Described here are any number of salts that form a divalent or trivalent cation (or said another way, product a cation with a valence of at least two).

Adjustments are made for the collateral effects of this additional ingredient. The effect of lowering the acrylamide level appears to derive from the divalent or trivalent cation, rather than from the anion that is paired with it. Limitations to the cation/anion pair, other than valence, are related to their acceptability in foods, such as safety, solubility, and their effect on taste, odor, appearance, and texture. For example the cation's effectiveness can be directly related to its solubility. Highly soluble salts, such as those salts comprising acetate or chloride anions, are most preferred additives. Less soluble salts, such as those salts comprising carbonate or hydroxide anions can be made more soluble by addition of phosphoric or citric acids or by disrupting the cellular structure of the starch based food. Suggested cations include calcium. Also described herein are magnesium, aluminium, iron, copper, and zinc. Suitable salts include calcium chloride. Also described herein are calcium citrate, calcium lactate, calcium malate, calcium gluconate, calcium phosphate, calcium acetate, calcium sodium EDTA calcium glycerophosphate, calcium hydroxide, calcium lactobionate, calcium oxide, calcium propionate, calcium carbonate, calcium stearoyl lactate, magnesium chloride, magnesium citrate, magnesium lactate, magnesium malate, magnesium gluconate, magnesium phosphate, magnesium hydroxide, magnesium carbonate, magnesium sulfate, aluminum chloride hexahydrate, aluminum chloride, aluminum hydroxide, ammonium alum, potassium alum, sodium alum, aluminum sulfate, ferric chloride, ferrous gluconate, ferric ammonium citrate, ferric pyrophosphate, ferrous fumarate, ferrous lactate, ferrous sulfate, cupric chloride, cupric gluconate, cupric sulphate, zinc gluconate, zinc oxide, and zinc sulphate. The invention uses calcium chloride. Also described herein is a combination of salts of one or more of the appropriate cations. A number of the salts, such as calcium salts, and in particular calcium chloride, are relatively inexpensive and commonly used as food. Calcium chloride can be used in combination with calcium citrate, thereby reducing the collateral taste effects of CaCl₂. Further, any number of calcium salts can be used in combination with one or more magnesium salts. One skilled in the art will understand that the specific formulation of salts required can be adjusted depending on the food product in question and the desired end-product characteristics.

It should be understood that changes in the characteristics of the final product, such as changes in color, taste, and consistency can be adjusted by various means. For example, color characteristics in potato chips can be adjusted by controlling the amount of sugars in the starting product. Some flavor characteristics can be changed by the addition of various flavoring agents to the end product. The physical texture of the product can be adjusted by, for example, the addition of leavening agents or various emulsifiers.

### Combinations of Agents in Making Dough

As also described herein the reduction of acrylamide can be caused by a single agent, such as a divalent or trivalent cation or one of several amino acids, to lower the amount of acrylamide found in cooked snacks. According to one embodiment of the invention there is provided the combination of various agents, combining calcium chloride with other agents to provide a significant reduction of acrylamide without greatly altering the flavour of the chips.

### I. Combinations of Calcium Chloride, Citric Acid, Phosphoric Acid

The inventors have found that calcium ions more effectively reduce acrylamide content at acidic pH. In the test shown below, the addition of calcium chloride in the presence of an acid was studied and compared to a sample with just the acid.

**Table 15: Effect of Combining CaCl₂ with Phosphoric Acid or Citric Acid on Acrylamide**

| **Ingredient** | | **Control** | **Phosphoric Acid** | **Phosphoric Acid & CaCl₂** | **Citric Acid & CaCl₂** |
|---|---|---|---|---|---|
| Potato flakes/modified starch (g) | | 5490 | 5490 | 5490 | 5490 |
| Sugar | | 360 | 360 | 360 | 360 |
| Oil | | 90 | 90 | 90 | 90 |
| Citric Acid | | | | | 30 |
| Phosphoric Acid | | | 30 | 30 | |
| CaCl₂ | | | | 30 | 30 |
| sodium bicarbonate & monocalcium phosphate | | 54 | | | |
| Emulsifier (g) | | 60 | 60 | 60 | 60 |
| Total Dry Mix (g) | | 6000 | 6000 | 6000 | 6000 |
| Water (ml) | | 3950 | 3950 | 3950 | 3950 |
| Moisture % | | 2.16 | 2.34 | 2.07 | 1.60 |
| Color | L | 67.69 | 71.39 | 72.70 | 73.27 |
| | A | 5.13 | 3.24 | 1.62 | 0.95 |
| | B | 26.51 | 26.91 | 26.05 | 26.24 |
| **Acrylamide (ppb)** | | **1191** | **322** | **84** | **83** |

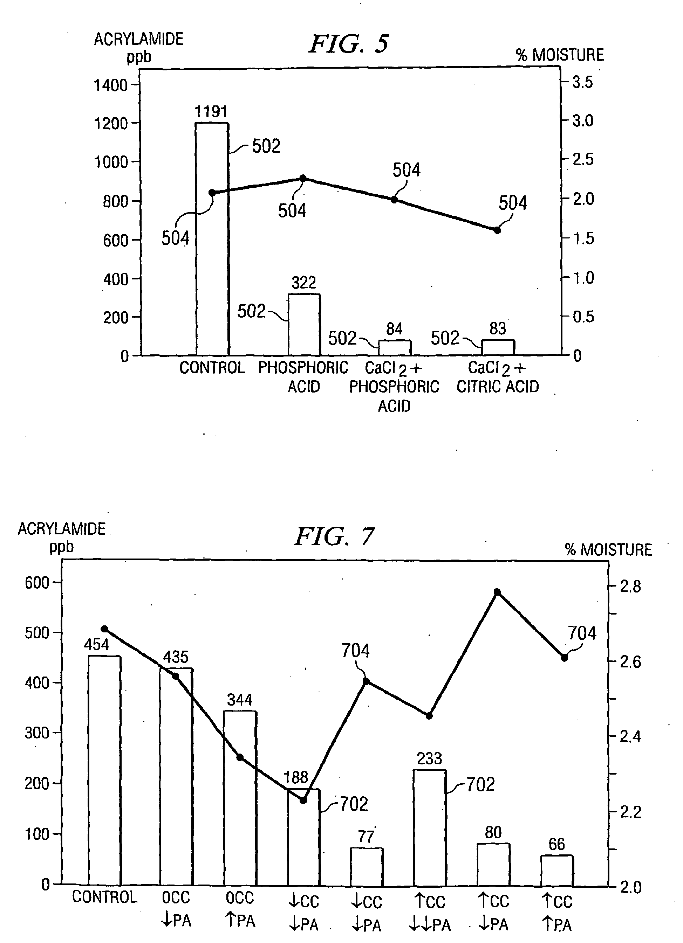

As seen in **Table 15** above, the addition of phosphoric acid alone reduced the acrylamide formation by 73% while the addition of CaCl₂ and an acid dropped the acrylamide level by 93%. **Figure 5** shows these results in graphical form. In this drawing, the acrylamide level **502** of the control is quite high (1191), but drops significantly when phosphoric acid alone is added and even lower when calcium chloride and an acid are added. At the same time, the moisture levels **504** of the various chips stayed in the same range, although it was somewhat lower in the chips with added agents. Thus, it has been demonstrated that calcium chloride and an acid can effectively reduce acrylamide.

Further tests were performed using calcium chloride and phosphoric acid as additives to a potato dough. Three different levels of calcium chloride were used, corresponding to 0%, 0.45% and 0.90% by weight of the potato flakes. These were combined with three different levels of phosphoric acid, corresponding to 0%, 0.05%, or 0.1 % of the flakes. Additionally, three levels of reducing sugar in the flakes were tested, corresponding to 0.2%, 1.07%, and 2.07%, although not all combinations of these levels are represented. Each test was mixed into dough, shaped, and cooked to form potato chips. The oil fry temperature, fry time, and sheet thickness were maintained constant at 350F, 16 seconds, and 0.64 mm respectively. For clarity, the results are presented in three separate tables **(16A, 16B,** and **16C)** with each table showing the results for one of the levels of sugar in the potato flakes. Additionally, the tests are arranged so that the controls, with no calcium chloride or phosphoric acid, are on the left-hand side. Within the table, each level of calcium chloride (CC) is grouped together, with variations in the phosphoric acid (PA) following.

**Table 16A: CaCl₂/Phosphoric Acid Effect on Acrylamide Level - 0.2% Reducing Sugars**

| **Cell** | | **Cntrl** | **No CC ↓PA** | **↓CC No PA** | **↓CC ↑PA** | **↑CC ↓PA** |
|---|---|---|---|---|---|---|
| | | **(16)** | **(5)** | **(7)** | **(4)** | **(8)** |
| CaC12 % | | --- | --- | 0.45 | 0.45 | 0.90 |
| Phosphoric Acid% | | --- | 0.05 | --- | 0.10 | 0.05 |
| Moisture | | 2.36 | 2.36 | 2.30 | 2.30 | 2.42 |
| Oil | | 22.83 | 21.77 | 23.60 | 22.20 | 23.75 |
| Color | L | 69.42 | 74.39 | 75.00 | 75.07 | 74.39 |
| | A | 2.69 | 0.10 | -0.02 | -0.13 | 0.10 |
| | B | 28.00 | 27.99 | 27.80 | 27.64 | 27.99 |
| **Acrylamide** | | **171** | **131** | **41** | **46** | **40** |

In the lowest level of reducing sugars in this test, we can see that the levels of acrylamide produced are normally in the lower range, as would be expected. At this level of sugars, calcium chloride alone dropped the level of acrylamide to less than ¼ of the control, with little additional benefit gained by the addition of phosphoric acid. In the mid-range of reducing sugars, shown in the following table, the combination of calcium chloride reduces the level of acrylamide from 367 ppb in the control to 69 ppb in cell 12. Although some of this reduction may be attributed to the slightly higher moisture content of cell 12 (2.77 vs. 2.66 for the control), further support is shown by the significant reduction in acrylamide even when the levels of calcium chloride and phosphoric acid are halved. This is shown in cell 6, which has a significant reduction in acrylamide and moisture content lower than the control.

**Table 16B: CaCl₂/Phosphoric Acid Effect on Acrylamide Level -1.07% Reducing Sugars**

| **Cell** | | **Cntrl** | **No CC ↑PA** | **↓CC ↓PA** | **↓CC ↓PA** | **↓CC ↓PA** | **↓CC ↓PA** | **↑CC 0 PA** | **↓CC ↓PA** |
|---|---|---|---|---|---|---|---|---|---|
| | | **(15)** | **(3)** | **(2a)** | **(2b)** | **(6)** | **(13)** | **(9)** | **(12)** |
| **CaCl₂** | | --- | --- | 0.45 | 0.45 | 0.45 | 0.45 | 0.90 | 0.90 |
| **Phosphoric Acid%** | | --- | 0.10 | 0.05 | 0.05 | 0.05 | 0.05 | --- | 0.10 |
| **Moisture** | | 2.66 | 2.59 | 3.16 | 2.74 | 2.61 | 2.56 | 2.81 | 2.77 |
| **Oil** | | 23.72 | 24.24 | 25.24 | 22.58 | 23.48 | 25.12 | 23.99 | 24.71 |
| **Color** | **L** | 69.45 | 67.69 | 72.23 | 70.44 | 70.58 | 72.06 | 72.64 | 73.59 |
| | **A** | 2.73 | 4.63 | 0.54 | 2.32 | 2.59 | 2.03 | 0.84 | 0.47 |
| | **B** | 28.00 | 28.54 | 26.51 | 27.55 | 27.79 | 27.64 | 27.05 | 26.82 |
| **Acrylamide** | | **367** | **451** | **96** | **170** | **192** | **207** | **39** | **69** |

**Table 16C: CaCl₂/Phosphoric Acid Effect on Acrylamide Level - 2.07% Reducing Sugars**

| **Cell** | | **No CC ↓PA** | **↓CC No PA** | **↓CC No PA** | **↓CC No PA** | **↓CC ↑PA** | **↓CC ↓PA** |
|---|---|---|---|---|---|---|---|
| | | **(11)** | **(1a)** | **(1b)** | **(1c)** | **(10)** | **(14)** |
| CaCl2 % | | --- | 0.45 | 0.45 | 0.45 | 0.45 | 0.90 |
| Phosphoric Acid% | | 0.05 | --- | --- | --- | 0.10 | 0.05 |
| Moisture | | 2.47 | 2.68 | 2.60 | 3.19 | 2.80 | 3.18 |
| Oil | | 24.70 | 25.07 | 24.48 | 22.81 | 24.19 | 23.25 |
| Color | L | 61.84 | 62.32 | 63.86 | 69.42 | 69.11 | 72.61 |
| | A | 8.10 | 5.18 | 6.70 | 3.00 | 3.78 | 1.28 |
| | B | 28.32 | 26.27 | 28.00 | 27.66 | 27.70 | 26.78 |
| **Acrylamide** | | **667** | **431** | **360** | **112** | **150** | **51** |

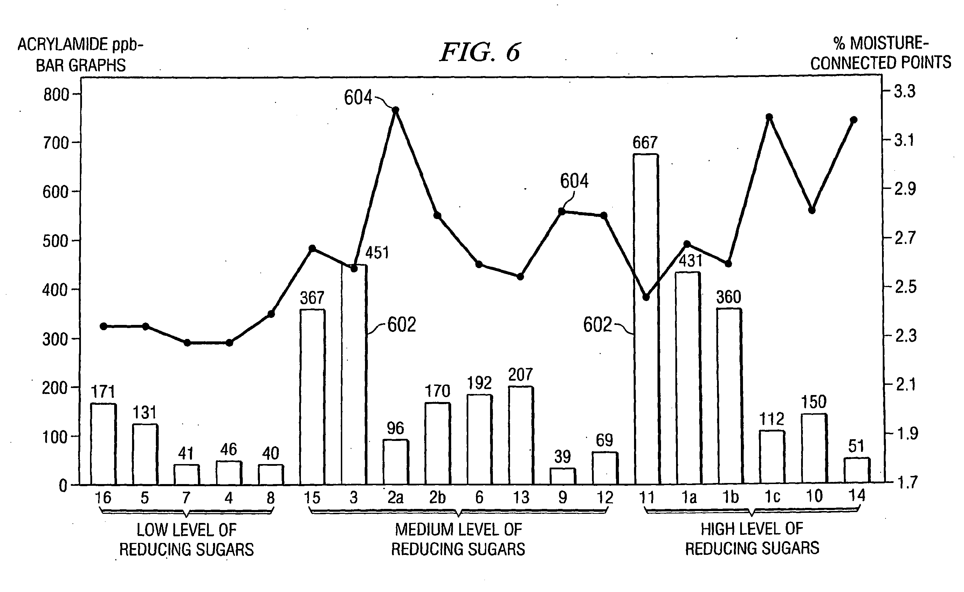

As can be seen from these three tables, the levels of calcium chloride and phosphoric acid necessary to reduce the level of acrylamide increases as the level of reducing sugars increases, as would be expected. **Figure 6** shows a graph corresponding to the three tables above, with the bars **602** showing acrylamide level and the points **604** demonstrating moisture level. The results are again grouped by the level of reducing sugar available from the potato; within each group there is a general movement downward as first one and then several acrylamide-reducing agents are used to lower the acrylamide level.

Several days later, another test with the same protocol as for the three tables above was conducted using only the potato flakes with 1.07% reducing sugars with the same three levels of calcium chloride and with four levels of phosphoric acid (0,0.025%, 0.05%, and 0.10%). The results are shown below in **Table 17.** **Figure** 7 graphically shows the results for the table, with acrylamide levels expressed as bars **702** and calibrated to the markings on the left-hand side while percentage moisture is expressed as points **704** and calibrated to the markings on the right-hand side of the drawing. As the amount of calcium chloride increases, e.g. moving from left to right across the whole table, the acrylamide decreases. Likewise, for each level of calcium chloride, e.g. moving left to right within one level of calcium chloride, the level of acrylamide also generally decreases.

**Table 17: CaCl₂ / Phosphoric Acid Effect on Acrylamide Level -1.07% Reducing Sugars**

| **Cell** | | **Cntrl** | **No CC ↓PA** | **No CC ↑PA** | **↓CC ↓PA** | **↑CC ↓PA** | **↑CC ↓↓PA** | **↑CC ↓PA** | **↑CC ↑PA** |
|---|---|---|---|---|---|---|---|---|---|
| | | **(1)** | **(4)** | **(7)** | **(3)** | **(6)** | **(8)** | **(2)** | **(5)** |
| **CaCl₂** | | --- | --- | --- | 0.45 | 0.45 | 0.90 | 0.90 | 0.90 |
| **Phosphoric Acid%** | | --- | 0.050 | 0.100 | 0.050 | 0.050 | 0.025 | 0.050 | 0.100 |
| **Moisture** | | 2.68 | 2.52 | 2.38 | 2.29 | 2.55 | 2.45 | 2.78 | 2.61 |
| **Oil** | | 23.74 | 22.57 | 22.13 | 24.33 | 23.84 | 22.54 | 24.11 | 22.73 |
| **Color** | **L** | 65.97 | 64.67 | 64.55 | 65.18 | 66.82 | 68.36 | 70.23 | 68.75 |
| | **A** | 4.75 | 5.23 | 5.53 | 5.06 | 4.09 | 3.17 | 2.19 | 2.92 |
| | **B** | 27.70 | 27.83 | 27.94 | 27.79 | 27.64 | 27.17 | 26.28 | 27.06 |
| **Acrylamide** | | **454** | **435** | **344** | **188** | **77** | **233** | **80** | **66** |

### II. Calcium Chloride/Citric Acid with Cysteine

In some of the previous tests on corn chips performed by the inventors, the amount of calcium chloride and phosphoric acid necessary to bring the level of acrylamide to a desired level produced objectionable flavors. The following test was designed to reveal if the addition to the potato dough of cysteine - which has been shown to lower the levels of acrylamide in the chips - would allow the levels of calcium chloride and acid to be lowered to acceptable taste levels while keeping the level of acrylamide low. In this test, the three agents were added to the masa (dough) at a ratio of (i.) 0.106% CalCl₂, 0.084% citric acid, and 0.005% L. cysteine in a first experiment; (ii) 0.106% Ca/Cl₂ and 0.084% citric acid, but no cysteine in a second experiment, and 0.053% Ca/Cl₂, 0.042% citric acid with 0.005% L. cysteine as a third experiment. Each experiment was duplicated and run again, with both results shown below. The masa is about 50% moisture, so the concentrations would approximately double if one translates these ratios to solids only. Additionally, in each test, part of the run was flavored with a nacho cheese seasoning at about 10% of the base chip weight. Results of this test are shown in **Table 18** below. In this table, for each category of chip, e.g., plain chip, control, the results of the first-run experiment are given in acrylamide #1; the results of the second experiment are given as acrylamide #2, and the average of the two given as acrylamide average. Only one moisture level was taken, in the first experiment; that value is shown.

**Table 18: Effect of Cysteine with CaCl₂ / Citric Acid on Acrylamide Level in Corn Chips**

| **Cell** | **Plain chip** | | | | **Nacho chip** | | | |
|---|---|---|---|---|---|---|---|---|
| | **Cntrl** | **↑CC ↑Citric** | **↑CC ↑Citric** | **↓CC ↓Citric** | **Cntrl** | **↑CC ↑Citric** | **↑CC ↑Citric** | **↓CC ↓Citric** |
| | | **0 Cys** | **Cys** | **Cys** | | **0 Cys** | **Cys** | **Cys** |
| **CaCl₂ (%)** | | 0.106 | 0.106 | 0.053 | | 0.106 | 0.106 | 0.053 |
| **Citric acid (%)** | | 0.084 | 0.084 | 0.042 | | 0.084 | 0.084 | 0.042 |
| **Cysteine(%)** | | | 0.005 | 0.005 | | | 0.005. | 0.005 |
| **Acrylamide #1 ppb** | **163** | **154** | **70** | **171** | **90** | **55** | **62** | **77** |
| **Acrylamide #2 ppb** | **102** | **113** | **74** | **103** | **71** | **53** | **50** | **76** |
| **Acrylamide average ppb** | **132.5** | **133.5** | **72** | **137** | **80.5** | **54** | **56** | **76.5** |
| **Moisture %** | 1.07 | 0.91 | 1.07 | 0.95 | 1.26 | 1.49 | 1.23 | 1.25 |

When combined with 0.106% CaC12 and 0.084% citric acid, the addition of cysteine cut the production of acrylamide approximately in half. In the chips flavored with nacho flavoring, the calcium chloride and citric acid alone reduced the production of acrylamide from 80.5 to 54 ppb, although in this set of tests, the addition of cysteine did not appear to provide a further reduction of acrylamide.

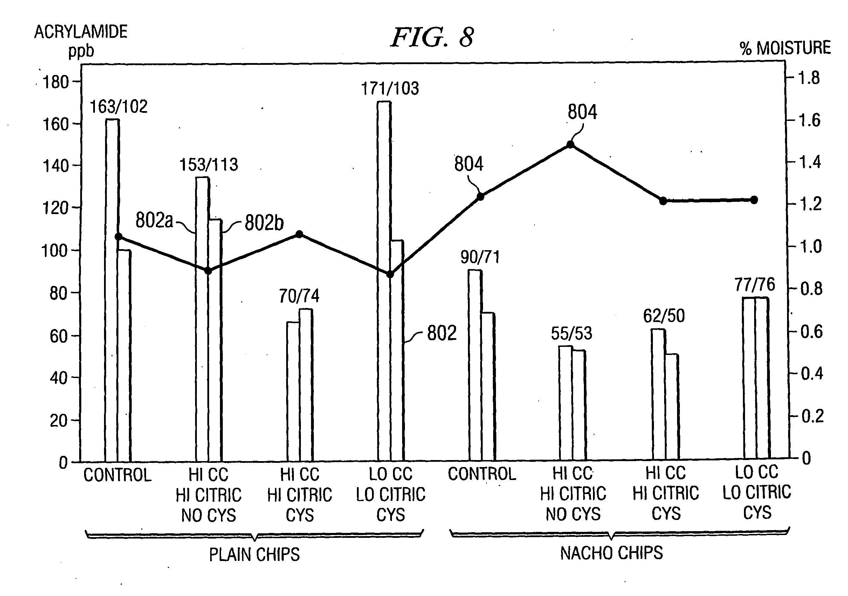

**Figure 8** graphically presents the same data as the table above. For each type of chip on which the experiment was run (e.g., plain chip, control), two bars **802** show the acrylamide results. Acrylamide results **802a** from the first experiment are shown on the left for each type chip, with the acrylamide results **802b** from the second experiment shown on the right. Both acrylamide results are calibrated to the markings on the left of the graph. The single moisture level is shown as a point **804** overlying the acrylamide graph and is calibrated to the markings on the right of the graph.

After the above test was completed, fabricated potato chips were similarly tested, using potato flakes containing two different levels of reducing sugars. To translate the concentrations used in the corn chip test to fabricated potato chips, the sum of the potato flakes, potato starch, emulsifiers and added sugar were considered as the solids. The amounts of CaCl₂, citric acid, and cysteine were adjusted to yield the same concentration as in the corn chips on a solids basis. In this test, however, when higher levels of calcium chloride and citric acid were used, a higher level of cysteine was also used. Additionally, a comparison was made in the lower reducing sugar portion of the test, to the use of calcium chloride in combination with phosphoric acid, with and without cysteine. The results are shown in **Table 19.**

We can see from these that in potato flakes with 1.25% of reducing sugars, the combination of calcium chloride, citric acid, and cysteine at the first level above reduced the formation of acrylamide from 1290 ppb to 594 ppb, less than half of the control figure. Using the higher levels of the combination of agents reduced the formation of acrylamide to 306 ppb, less than half of the control amount.

Using the same potato flakes, phosphoric acid and calcium chloride alone reduced the formation of acrylamide from the same 1290 to 366 ppb, while a small amount of cysteine added with the phosphoric acid and calcium chloride reduced the acrylamide still further, to 188 ppb.

Finally, in the potato flakes having 2% reducing sugars, the addition of calcium chloride, citric acid, and cysteine reduced the formation of acrylamide from 1420 to 665 ppb, less than half.

**Table 19: Effect of Cysteine with CaCl₂ / Acid on Acrylamide Level in Potato Chips**

| **Cell** | | **Medium reducing sugars (1.25%)** | | | | | **High reducing sugars (2%)** | |
|---|---|---|---|---|---|---|---|---|
| | | **Cntrl** | **↓CC ↓Citric ↓Cyst** | **↑CC ↑Citric ↑Cyst** | **CC PhosA 0Cyst** | **CC PhosA Cyst** | **Cntrl** | **CC ↓Citric ↓Cyst** |
| | | **(1B)** | **(2)** | **(3)** | **(4)** | **(4A)** | **(6)** | **(7)** |
| **Calcium chloride** | | | 10.2 | 20.4 | 36 | 36 | | 10.2 |
| **Citric acid** | | | 8 | 16 | | | | 8 |
| **Phosphoric acid** | | | | | 4 | 4 | | |
| **Cysteine** | | | 0.48 | 0.96 | | 0.48 | | 0.48 |
| **Acrylamide ppb** | | **1290** | **594** | **306** | **366** | **188** | **1420** | **665** |
| **Moisture %** | | 1.82 | 2.06 | 2.12 | 2.06 | 2.33 | 2.28 | **2.23** |
| **Color** | **L** | 56.84 | 65.47 | 69.29 | 66.88 | 73.09 | 61.06 | 63.50 |
| | **A** | 10.20 | 6.42 | 4.07 | 4.42 | 1.55 | 9.03 | 7.93 |
| | **B** | 27.53 | 28.40 | 28.17 | 28.10 | 27.07 | 28.07 | 28.00 |

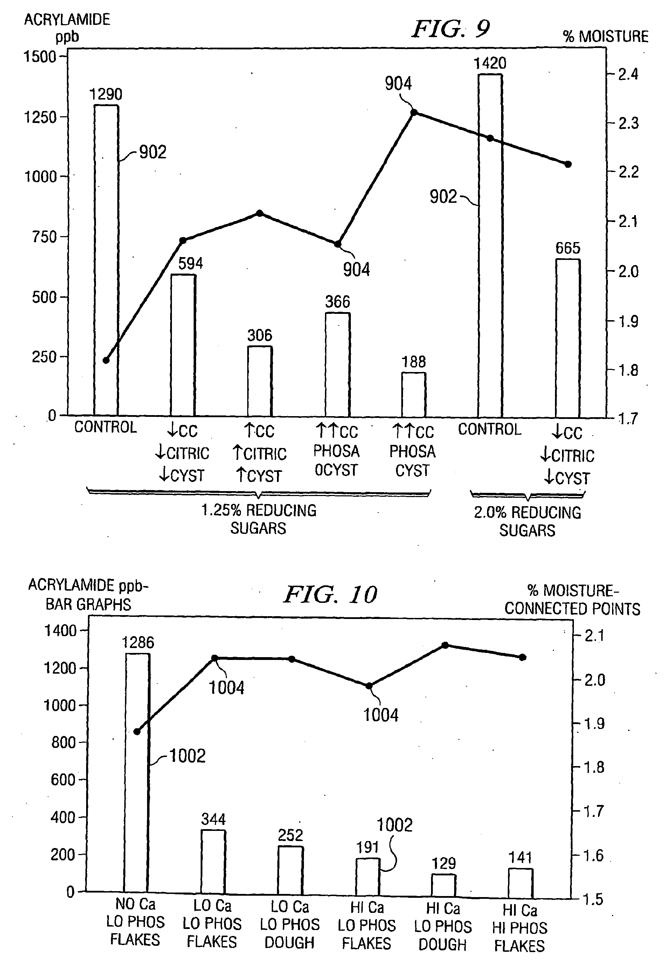

**Figure 9** demonstrates graphically the results of this experiment. Results are shown grouped first by the level of reducing sugars, then by the amount of acrylamide-reducing agents added. As in the previous graphs, bars **902** representing the level of acrylamide are calibrated according to the markings on the left-hand side of the graph, while the points 904 representing the moisture level are calibrated according to the markings to the right-hand side of the graph.

The above experiments have shown that the acrylamide-reducing agents do not have to be used separately, but can be combined to provide added benefit. This added benefit can be used to achieve increasingly lower levels of acrylamide in foods or to achieve a low level of acrylamide without producing significant changes to the taste of texture of those foods.

The specific embodiments shown have disclosed calcium chloride combined with citric acid or phosphoric acid and these with cysteine. Also described herein are combinations that use other calcium salts, the salts of other divalent or trivalent cations, other food-grade acids, and any of the other amino acids that have been shown to lower acrylamide in a finished food product. Additionally, although this has been demonstrated in potato chips and corn chips, also described herein is: the same use of combinations of agents in other fabricated food products that are subject to the formation of acrylamide, such as cookies, crackers, etc.

### Agents to Reduce Acrylamide Added in the Manufacture of Potato Flakes

The addition of calcium chloride and an acid has been shown to lower acrylamide in fried and baked snack foods formulated with potato flakes. It is believed that the presence of an acid achieves its effect by lowering the pH. It is not known whether the calcium chloride interferes with the loss of the carboxyl group or the subsequent loss of the amine group from free asparagine to form acrylamide. The loss of the amine group appears to require high temperature, which generally occurs toward the end of the snack dehydration. The loss of the carboxyl group is believed to occur at lower temperatures in the presence of water.

Potato flakes can be made either with a series of water and steam cooks (conventional) or with a steam cook only (which leaches less from the exposed surfaces of the potato). The cooked potatoes are then mashed and drum dried. Analysis of flakes has revealed very low acrylamide levels in flakes (less than 100 ppb), although the products made from these flakes can attain much higher levels of acrylamide.

It was theorized that if either lowering dough pH with acid or adding calcium chloride to the dough interferes with the loss of the carboxylic group, then introducing these additives during the flake production process might either (a) reduce the carboxyl loss thus reducing the rate of amine loss during the snack food dehydration or (b) whatever the mechanism, insure that the intervention additive is well distributed in the dough that is dehydrated into the snack food. The former, if it happens, would be a likely bigger effect on acrylamide than the latter.

Another possible additive to reduce the formation of acrylamide in fabricated food products is asparaginase. Asparaginase is known to decompose asparagine to aspartic acid and ammonia. Although it is not possible to utilize this enzyme in making potato chips from sliced potatoes, the process of making flakes by cooking and mashing potatoes (a food ingredient) breaks down the cell walls and provides an opportunity for asparaginase to work. In a preferred embodiment, the asparaginase is added to the food ingredient in a pure form as food grade asparaginase.

The inventors designed the following sets of experiments to study the effectiveness of various agents added during the production of the potato flakes in reducing the level of acrylamide in products made with the potato flakes.

### I. Calcium Chloride and Phosphoric Acid Used in Making Potato Flakes

This series of tests were designed to evaluate the reduction in the level of acrylamide when CaCl₂ and/or phosphoric acid are added during the production of the potato flakes. The tests also address whether these additives had the same effect as when they are added at the later stage of making the dough.

For this test, the potatoes comprised 20% solids and 1% reducing sugar. The potatoes were cooked for 16 minutes and mashed with added ingredients. All batches received 13.7 gm of an emulsifier and 0.4 gm of citric acid. Four of the six batches had phosphoric acid added at one of two levels (0.2% and 0.4% of potato solids) and three of the four batches received CaCl₂ at one of two levels (0.45% and 0.90% of the weight of potato solids). After the potatoes were dried and ground into flakes of a given size, various measurements were performed and each batch was made into dough. The dough used 4629 gm of potato flakes and potato starch, 56 gm of emulsifier, 162 ml of liquid sucrose and 2300 ml of water. Additionally, of the two batches that did not receive phosphoric acid or CaCl₂ during flake production, both batches received these additives at the given levels as the dough was made. The dough was rolled to a thickness of 0.64 mm, cut into pieces, and fried at 350°F for 20 seconds. **Table 20** below shows the results of the tests for these various batches.

**Table 20: Effect of CaCl₂ / Phosphoric Acid added to Flakes or Dough on Acrylamide Level**

| **Batch** | **0 Ca ↓phos** | **↓Ca ↓phos** | **↓Ca ↓phos** | **↑Ca ↓phos** | **↑Ca ↓phos** | **↑Ca ↑phos** |
|---|---|---|---|---|---|---|
| | **(C) in flakes** | **(B) in flakes** | **(F) in dough** | **(A) in flakes** | **(D) in dough** | **(E) in flakes** |
| **Added to flakes** | | | | | | |
| **Wt. (gm) Calcium Chloride** | 0 | 24.7 | 0 | 49.4 | 0 | 49.4 |
| **Wt (gm) Phosphoric Acid** | 11.0 | 11.0 | 0 | 11.0 | 0 | 21.9 |

| **Dried Flake Tests** | | | | | | |
|---|---|---|---|---|---|---|
| **Moisture (%)** | 6.3 | 6.5 | 4.5 | 6.8 | 6.2 | 7.7 |
| **Water Absorption Index (WAI) (%)** | 8.2 | 8.3 | 9.2 | 8.2 | 8.1 | 8.1 |
| **On 20 mesh** | 1.5 | 1.8 | 2.0 | 1.0 | 1.7 | 1.6 |
| **On 40 mesh** | 26.6 | 30.9 | 32.3 | 27.2 | 28.3 | 24.4 |
| **On 60 mesh** | 35.3 | 37.1 | 36.1 | 38.4 | 37.5 | 35.3 |
| **On 80 mesh** | 14.6 | 13.2 | 12.0 | 14.5 | 14.4 | 16.0 |
| **On 100 mesh** | 5.7 | 4.8 | 4.5 | 5.4 | 5.4 | 6.5 |
| **On 200 mesh** | 11.5 | 8.8 | 8.6 | 10.1 | 9.3 | 12.1 |
| **Through 200 mesh** | 4.7 | 3.3 | 4.5 | 3.4 | 3.3 | 4.0 |

| **Added to dough** | | | | | | |
|---|---|---|---|---|---|---|
| **Calcium Chloride dihydrate** | 0 | 0 | 23.7 | 0 | 47.4 | 0 |
| **Phosphoric Acid** | 0 | 0 | 14.4 | 0 | 7.9 | 0 |

| **Test Results on Chips** | | | | | | |
|---|---|---|---|---|---|---|
| **Moisture** | 1.87 | 2.04 | 2.04 | 2.07 | 1.97 | 2.05 |
| **Oil** | 23.53 | 23.82 | 25.12 | 23.76 | 24.44 | 24.98 |
| **Color - L** | 54.63 | 62.58 | 67.28 | 66.89 | 69.48 | 66.87 |
| **Color - A** | 13.63 | 9.23 | 6.99 | 6.27 | 5.61 | 7.21 |
| **Color - B** | 27.32 | 28.59 | 29.54 | 28.85 | 29.26 | 29.37 |
| **Acrylamide** | **1286** | **344** | **252** | **129** | **191** | **141** |

As seen in the results above and in the accompanying graph of Figure 10, the acrylamide level was the highest in Test C when only phosphoric acid was added to the flake preparation and was the lowest when calcium chloride and phosphoric acid were used in combination.

### II. Asparaginase Used in Making Potato Flakes

Asparaginase is an enzyme that decomposes asparagine to aspartic acid and ammonia. Since aspartic acid does not form acrylamide, the inventors reasoned that asparaginase treatment should reduce acrylamide formation when the potato flakes are heated.

The following test was performed. Two grams of standard potato flakes was mixed with 35 ml of water in a metal drying pan. The pan was covered and heated at 100°C for 60 minutes. After cooling, 250 units of asparaginase in 5 ml water were added, an amount of asparaginase that is significantly more than the calculated amount necessary. For control, potato flakes and 5 ml of water without enzyme was mixed. The potato flakes with asparaginase were held at room temperature for 1 hour. After enzyme treatment, the potato flake slurry was dried at 60°C overnight. The pans with dried potato flakes were covered and heated at 120°C for 40 minutes. Acrylamide was measured by gas chromatograph, mass spectrometry of brominated derivative. The control flakes contained 11,036 ppb of acrylamide, while the asparaginase-treated flakes contained 117 ppb of acrylamide, a reduction of more than 98%.

Following this first test, investigation was made into whether or not it was necessary to cook the potato flakes and water prior to adding asparaginase for the enzyme to be effective. To test this, the following experiment was performed:

Potato flakes were pretreated in one of four ways. In each of the four groups, 2 grams of potato flakes were mixed with 35 milliliters of water. In the control pre-treatment group (a), the potato flakes and water were mixed to form a paste. In group (b), the potato flakes were homogenized with 25 ml of water in a Bio Homogenizer M 133/1281-0 at high speed and mixed with an additional 10 ml of deionized water. In group (c), the potato flakes and water were mixed, covered, and heated at 60°C for 60 minutes. In group (d), the potato flakes and water were mixed, covered, and heated at 100°C for 60 minutes. For each pre-treatment group (a), (b), (c), and (d), the flakes were divided, with half of the pre-treatment group being treated with asparaginase while the other half served as controls, with no added asparaginase.

A solution of asparaginase was prepared by dissolving 1000 units in 40 milliliters of deionized water. The asparaginase was from Erwinia chrysanthemi, Sigma A-2925 EC 3.5.1.1. Five milliliters of asparaginase solution (5ml) was added to each of the test potato flake slurries (a), (b), (c), and (d). Five milliliters of deioninzed water was added to the control potato flake slurry (a). All slurries were left at room temperature for one hour, with all tests being performed in duplicate. The uncovered pans containing the potato flake slurries were left overnight to dry at 60°C. After covering the pans, the potato flakes were heated at 120°C for 40 minutes. Acrylamide was measured by gas chromatography, mass spectroscopy of brominated derivative.

As shown in **Table 21** below, asparaginase treatment reduced acrylamide formation by more than 98% for all pretreatments. Neither homogenizing nor heating the potato flakes before adding the enzyme increased the effectiveness of asparaginase. In potato flakes, asparagine is accessible to asparaginase without treatments to further damage cell structure. Notably, the amount of asparaginase used to treat the potato flakes was in large excess. If potato flakes contain 1% asparagine, adding 125 units of asparaginase to 2 grams of potato flakes for 1 hour is approximately a 50-fold excess of enzyme.

**Table 21: Effect of Pretreatments of Potato Flakes on Effectiveness of Asparagine**

| | **Acrylamide ppb** | | **Acrylamide as % of Control** |
|---|---|---|---|
| **Pre-treatment** | **Control - No Asparaginase** | **Test - Asparaginase** | |
| (a) No pre-treatment | 12512 | 107 | 0.9 |
| (b) Homogenizing | 12216 | 126 | 1.0 |
| (c) Heated at 60 C | 12879 | 105 | 0.8 |
| (d) Heated at 100 C | 12696 | 166 | 1.3 |

Another set of tests was designed to evaluate whether the addition of asparaginase during the production of potato flakes provides a reduction of acrylamide in the cooked product made from the flakes and whether buffering the mashed potatoes used to make the flakes to a preferred pH for enzyme activity (e.g., pH = 8.6) increases the effectiveness of the asparaginase. The buffering was done with a solution of sodium hydroxide, made with four grams of sodium hydroxide added to one liter of water to form a tenth molar solution.

Two batches of potato flakes were made as controls, one buffered and one unbuffered. Asparaginase was added to two additional batches of potato flakes; again one was buffered while the other was not. The asparaginase was obtained from Sigma Chemical and was mixed with water in a ratio of 8 to 1 water to enzyme. For the two batches in which asparaginase was added, the mash was held for 40 minutes after adding the enzyme, in a covered container to minimize dehydration and held at approximately 36°C. The mash was then processed on a drum dryer to produce the flakes. The potato flakes were used to make potato dough according to the previously shown protocols, with the results shown in **Table 22** below.

**Table 22: Effect of Asparaginase and Buffering on Acrylamide Level in Potato Chips**

| Measurement | Unbuffered Control | Unbuffered Asparaginase | Buffered Control | Buffered Asparaginase |
|---|---|---|---|---|
| Moisture | 1.56 | 1.53 | 1.68 | 1.61 |
| Oil | 22.74 | 23.12 | 21.77 | 21.13 |
| Color - L | 61.24 | 60.70 | 57.24 | 57.35 |
| Color - A | 6.57 | 9.30 | 5.04 | 7.52 |
| Color - B | 28.95 | 28.29 | 27.12 | 27.41 |
| **Acrylamide ppb** | **768** | **54** | **1199** | **111** |

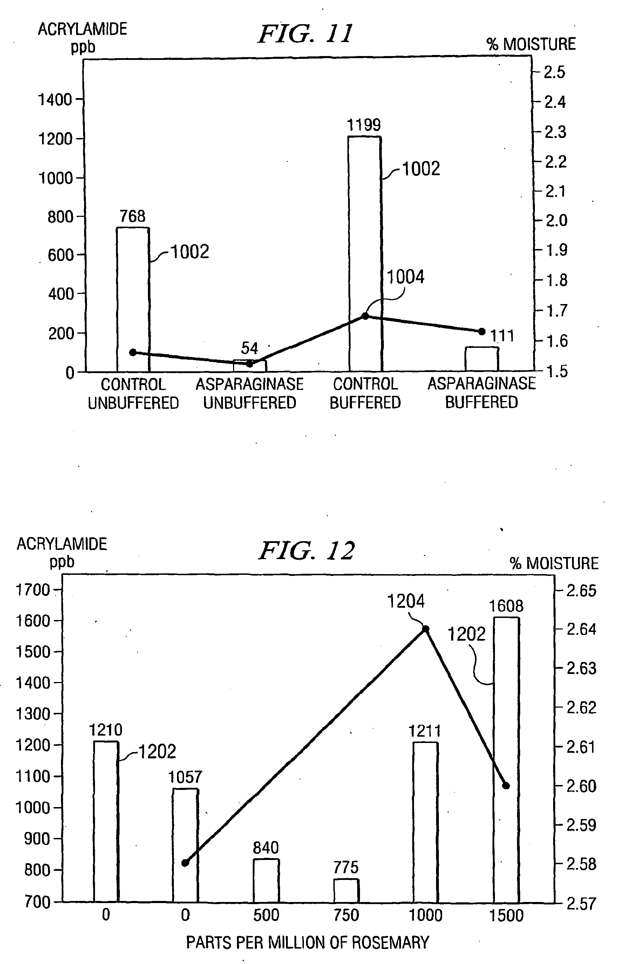

As shown in **Table 22**, the addition of asparaginase without a buffer reduced the production of acrylamide in the finished chips from 768 to 54 ppb, a reduction of 93%. The use of a buffer did not appear to have the desired effect on the formation of acrylamide; rather the use of the buffered solution allowed a greater amount of acrylamide to form in both the control and the asparaginase experiments. Still, the asparaginase reduced the level of acrylamide from 1199 to 111, a reduction of 91 %. **Figure 11** shows the results from **Table 22** in a graphical manner. As in the previous drawings, bars **1102** represent the level of acrylamide for each experiment, calibrated according to the markings on the left-hand side of the graph, while points **1104** represent the moisture level in the chips a, calibrated according to the markings on the right-hand side of the graph.

Tests were also run on the samples to check for free asparagine to determine if the enzyme was active. The results are shown below in **Table 23.**

**Table 23: Test for Free Asparagine in Enzyme Treated Flakes**

| | **Control Unbuffered** | **Asparaginase Unbuffered** | **Control Buffered** | **Asparaginase Buffered** |
|---|---|---|---|---|
| **Free Asparagine** | 1.71 | 0.061 | 2.55 | 0.027 |
| **Fructose** | <0.01 | <0.01 | <0.01 | <0.01 |
| **Glucose** | <0.02 | <0.02 | <0.02 | <0.02 |
| **Sucrose** | 0.798 | 0.828 | 0.720 | 0.322 |

In the unbuffered group, the addition of asparaginase reduced the free asparagine from 1.71 to 0.061, a reduction of 96.5%. In the buffered group, the addition of asparaginase reduced the free asparagine from 2.55 to 0.027, a reduction of 98.9%.

Finally, sample flakes from each group were evaluated in a model system. In this model system, a small amount of flakes from each sample was mixed with water to form an approximate 50% solution of flakes to water. This solution was heated in a test tube for 40 minutes at 120°C. The sample was then analyzed for acrylamide formation, with the results shown in **Table 24**. Duplicate results for each category are shown side by side. In the model system, the addition of asparaginase to the unbuffered flakes reduced the acrylamide from an average of 993.5 ppb to 83 ppb, a reduction of 91.7%. The addition of asparaginase to the buffered flakes reduced the acrylamide from an average of 889.5 ppb to an average of 64.5, a reduction of 92.7%.

**Table 24: Model System Effect of Asparaginase on Acrylamide**

| | **Control Unbuffered** | | **Asparaginase Unbuffered** | | **Control Buffered** | | **Asparaginase Buffered** | |
|---|---|---|---|---|---|---|---|---|
| **Acrylamide ppb** | 1019 | 968 | 84 | 82 | 960 | 819 | 70 | 59 |

### Rosemary Extract Added to Frying Oil

In a separate test, the effect of adding rosemary extract to the frying oil for fabricated potato chips was examined. In this test, identically fabricated potato chips were fried either in oil that had no additives (controls) or in oil that had rosemary extract added at one of four levels: 500, 750, 1,000, or 1,500 parts per million. **Table 25** below gives the results of this test.

**Table 25: Effect of Rosemary on Acrylamide**

| **Level of Rosemary ppm** | **0** | **0** | **500** | **750** | **1,000** | **1,500** |
|---|---|---|---|---|---|---|
| **Moisture %** | | 2.58 | | | 2.64 | 2.6 |
| **Acrylamide ppb** | 1210 | 1057 | 840 | 775 | 1211 | 1608 |

The average acrylamide level in the control chips was 1133.5 ppb. Adding 500 parts per million of rosemary to the frying oil reduced the acrylamide to 840, a reduction of 26%, while increasing the rosemary to 750 parts per million reduced the formation of acrylamide further, to 775, a reduction of 31.6%. However, increasing the rosemary to 1000 parts per million had no effect and increasing rosemary to 1500 parts per million caused the formation of acrylamide to increase to 1608 parts per billion, an increase of 41.9%.

**Figure 12** demonstrates the results of the rosemary experiment graphically. As in the previous examples, the bars **1202** demonstrate the level of acrylamide and are calibrated to the divisions on the left-hand side of the graph, while the points **1204** demonstrate the amount of moisture in the chips and are calibrated to the divisions on the right-hand side of the graph.

The disclosed test results have added to the knowledge of acrylamide-reducing agents that can be used in thermally processed, fabricated foods. Divalent and trivalent cations and amino acids have been shown to be effective in reducing the incidence of acrylamide in thermally processed, fabricated foods. These agents can be used individually, but can also be used in combination with each other or with acids that increase their effectiveness. The combination of agents can be utilized to further drive down the incidence of acrylamide in thermally processed foods from that attainable by single agents or the combinations can be utilized to attain a low level of acrylamide without undue alterations in the taste and texture of the food product. Asparaginase has been tested as an effective acrylamide-reducing agent in fabricated foods. It has also been shown that these agents can be effective not only when added to the dough for the fabricated food, but the agents can also be added to intermediate products, such as dried potato flakes or other dried potato products, during their manufacture. The benefit from agents added to intermediate products can be as effective as those added to the dough.

While the invention has been particularly shown and described with reference to several embodiments, it will be understood by those skilled in the art that various other approaches to the reduction of acrylamide in thermally processed foods by use of an amino acid additive may be made without departing from the spirit and scope of this invention. For example, while the process has been disclosed with regard to potato and corn products, the process can also be used in processing of food products made from barley, wheat, rye, rice, oats, millet, and other starch-based grains, as well as other foods containing asparagine and a reducing sugar, such as sweet potatoes, onion, and other vegetables. Further, the process has been demonstrated in potato chips and corn chips, but can be used in the processing of many other fabricated food products, such as other types of snack chips, cereals, cookies, crackers, hard pretzels, breads and rolls, and the breading for breaded meats.

## Claims

1. A method for lowering the level of acrylamide produced by the thermal processing of a dried food product, said method comprising the sequential steps of:
a) disrupting the cellular structure of a starch-based food containing asparagine;
b) adding two acrylamide-reducing agents to the starch-based food to form a mixture, wherein said acrylamide-reducing agents are:
calcium chloride, and
a food grade acid,
c) drying said mixture to form said dried food product,
d) using said dried food product to make a dough; and
e) thermally processing said dough,
wherein said starch-based food is potatoes, and wherein said disrupting step comprises mashing said starch-based food.

2. The method of Claim 1, wherein said disrupting step comprises cooking said starch-based food.

3. The method of Claim 1, wherein said food grade acid is phosphoric acid.

4. The method of Claim 1, wherein said food grade acid is and citric acid.

5. The method of Claim 1, wherein said adding step comprises adding an asparaginase solution to said starch-based food.

6. The method of Claim 1, wherein said drying step is performed in a drying drum.

7. The method of Claim 1, wherein said dried food product is potato flakes.

## Patentansprüche

1. Verfahren zum Verringern des Gehaltes an Acrylamid, welches durch thermisches Prozessieren eines getrockneten Lebensmittels hergestellt wurde, umfassend die aufeinanderfolgenden Schritte:
a) Aufbrechen der Zellstruktur eines stärkebasierten, Asparagin enthaltenden Lebensmittels
b) Hinzufügen zweier Acrylamid reduzierender Agenzien zu dem stärkebasierten Lebensmittel, um ein Gemisch zu bilden, wobei die Acrylamid reduzierenden Agenzien:
CaO und
eine Säure in Lebensmittelqualität sind;
c) Trocknen des Gemischs, um das getrocknete Lebensmittel zu bilden,
d) Verwenden des Lebensmittels, um einen Teig herzustellen,
e) Thermisches Prozessieren des Teiges,
wobei das stärkebasierte Lebensmittel Kartoffeln sind und wobei der Schritt des Aufbrechens Zerdrücken des stärkebasierten Lebensmittels umfasst.

2. Verfahren gemäß Anspruch 1, wobei der Schrott des Aufbrechens Garen des stärkebasierten Lebensmittels umfasst.

3. Verfahren gemäß Anspruch 1, wobei die Säure in Lebensmittelqualztät Phosphorsäure ist.

4. Verfahren gemäß Anspruch 1, wobei die Säure in Lebensmittelqualität Zitronensäure ist.

5. Verfahren gemäß Anspruch 1, wobei der Schritt des Hinzufügens Hinzufügen einer Asparaginaselösung zu dem stärkebasierten Lebensmittel umfasst.

6. Verfahren gemäß Anspruch 1, wobei der Trocknungsschritt in einer Trockentrommel durchgeführt wird.

7. Verfahren gemäß Anspruch 1, wobei das getrocknete Lebensmittel Kartoffelflocken sind.

## Revendications

1. Méthode pour réduire le taux d'acrylamide produit par le traitement thermique d'un produit alimentaire sec, ladite méthode comprenant les étapes consécutives de :
a) rupture de la structure cellulaire d'un aliment à base d'amidon contenant de l'asparagine ;
b) addition de deux agents réducteurs de l'acrylamide à l'aliment à base d'amidon pour former un mélange, lesdits agents réducteurs d'acrylamide tétant :
le chlorure de calcium et
un acide de qualité alimentaire,
c) séchage dudit mélange pour former ledit produit alimentaire sec,
d) utilisation dudit produit alimentaire sec pour produire une pâte ; et
e) traitement thermique de ladite pâte,
ledit aliment à base d'amidon étant la pomme de terre, et ladite étape de rupture comprenant la formation d'une purée avec ledit aliment à base d'amidon.

2. Méthode selon la revendication 1, dans laquelle ladite étape de rupture comprend la cuisson dudit aliment à base d'amidon.

3. Méthode selon la revendication 1, dans laquelle ledit acide de qualité alimentaire est l'acide phosphorique.

4. Méthode selon la revendication 1, dans laquelle ledit acide de qualité alimentaire est un acide citrique.

5. Méthode selon la revendication 1, dans laquelle ladite étape d'addition comprend l'addition d'une solution d'asparaginase audit aliment à base d'amidon.

6. Méthode selon la revendication 1, dans laquelle ladite étape de séchage est réalisée dans un tambour de séchage.

7. Méthode selon la revendication 1, dans laquelle ledit produit alimentaire sec est des flocons de pomme de terre.
